# EUROPEAN PATENT APPLICATION

(11) **EP 4 459 764 A1**
(43) Date of publication of application: **06.11.2024**
(21) Application number: 24171848.5
(22) Date of filing: 23.04.2024
(51) Int. Cl.: H01M 50/249, H01M 50/342, H01M 50/358, H01M 50/383, H01M 50/224

(54) **BATTERY ENCLOSURE FOR VEHICLE**

(30) Priority: 24.04.2023 US 202363461516 P
(71) Applicant: Polaris Industries Inc., Medina, MN 55340 (US)
(72) Inventor: DECKARD, Aaron, D., ZIONSVILLE, 46077 (US); KELLER, Justin, Osceola, 54020 (US); DASH, Soumya, 560043 Bangalore, Karnataka (IN); FRANKE, Michal, Medina, 55340-9770 (US); COLEMAN, Joshua, Medina, 55340-9770 (US); DUDLEY, Scott, Commerce Township, 48382 (US); JEONG, Jacob Jaekook, Woodbury, 55129 (US); LOGRASSO, Joseph, Troy, 48085 (US); BAUER, Ben, Lindstrom, 55045 (US); OURADNIK, Oliver, Medina, 55340-9770 (US)
(74) Representative: reuteler & cie SA

(57) **Abstract**

A battery enclosure may be provided for managing debris and gas from at least one battery during a thermal runaway event. The battery enclosure may comprise a housing adapted to receive the at least one battery in an interior of the housing and a vent extending from the housing. In one embodiment, the battery enclosure may further comprise a spark arrestor having a first region to vent the gas and a second region positioned to capture the debris. The vent may includes a first portion, a second portion, and a central portion between the first portion and the second portion defining a bend and including an enlarged area at the bend. The vent may include a first end, a second end, and a channel defined between the first end and the second end adapted to prevent fluid from entering the housing.

## Description

### TECHNICAL FIELD

The present disclosure relates generally to a recreational vehicle. More specifically, the disclosure relates to a battery enclosure for the recreational vehicle.

### BACKGROUND

Recreational vehicles, such as all-terrain vehicles (ATVs), utility vehicles (UVs) and side-by-side vehicles are widely used for recreational purposes. These vehicles may include various types of powertrains, including electric powertrains, which may include batteries. The batteries may be housed within other components of the vehicle.

### SUMMARY

As set forth above, embodiments provided herein relate to battery enclosures for a recreational vehicle. Exemplary embodiments include, but are not limited to, the following.

In an exemplary embodiment of the present disclosure, a battery enclosure for managing debris and gas from at least one battery during a thermal runaway event is provided. The battery enclosure comprising: a housing adapted to receive the at least one battery in an interior of the housing; a vent extending from the housing and including a first end and a second end, the first end in fluid communication with the interior of the housing; and a spark arrestor in fluid communication with the second end of the vent, the spark arrestor having a first region to vent the gas and a second region positioned to capture the debris.

In another exemplary embodiment thereof, a recreational vehicle is provided. The recreational vehicle comprising: a plurality of ground engaging members; a frame assembly supported by the plurality of ground engaging members, the frame assembly including a front frame assembly, a middle frame assembly, and a rear frame assembly; and a battery enclosure for managing debris and gas from at least one battery during a thermal runaway event. The battery enclosure including: a housing adapted to receive the at least one battery in an interior of the housing, a vent extending from the housing and including a first end and a second end, the first end in fluid communication with the interior of the housing, and a spark arrestor in fluid communication with the second end of the vent, the spark arrestor having a first region to vent the gas and a second region positioned to capture the debris.

In another exemplary embodiment thereof, a method of managing debris and gas from at least one battery during a thermal runaway event using a battery enclosure including an interior and an exterior is provided. The method comprising: detecting a threshold concentration of the gas; venting the gas to the exterior of the battery enclosure; releasing the debris to the exterior of the battery enclosure; slowing a velocity of the debris; capturing at least a portion of the debris; and releasing the gas to an outside environment.

In another exemplary embodiment, a battery enclosure for managing debris and gas from at least one battery during a thermal runaway event is provided. The battery enclosure comprising: a housing adapted to receive the at least one battery in an interior of the housing; and a vent extending from the housing. The vent including, a first portion defining a first opening in fluid communication with the interior of the housing, a second portion defining a second opening, and a central portion between the first portion and the second portion, the central portion defining a bend such that a first direction normal to the first opening and a second direction normal to the second opening are angled relative to each other and the central portion including an enlarged area at the bend.

In another exemplary embodiment thereof, a recreational vehicle is provided. The recreational vehicle comprising: a plurality of ground engaging members; a frame assembly supported by the plurality of ground engaging members; and a battery enclosure for managing debris and gas from at least one battery during a thermal runaway event. The battery enclosure including: a housing adapted to receive the at least one battery in an interior of the housing and a vent extending from the housing. The vent including: a first portion defining a first opening in fluid communication with the interior of the housing, a second portion defining a second opening, and a central portion between the first portion and the second portion, the central portion defining a bend such that the first opening and the second opening are angularly offset from each other and the central portion including an enlarged area at the bend.

In another exemplary embodiment thereof, a method of managing debris and gas from at least one battery during a thermal runaway event using a battery enclosure including an interior and an exterior is provided. The method comprising: venting the gas to the exterior of the battery enclosure; releasing the debris to the exterior of the battery enclosure; slowing a velocity of a first portion of the debris; and directing a velocity of a second portion of the debris toward an outside environment.

In another exemplary embodiment, a submergible battery enclosure is provided. The submergible battery enclosure comprising: a housing adapted to receive at least one battery in an interior of the housing and a vent extending from the housing, the vent including a first end defining a first opening in fluid communication with the interior of the housing, a second end defining a second opening, and a channel defined between the first end and the second end, the channel adapted to prevent fluid from entering the housing.

While multiple embodiments are disclosed, still other embodiments of the presently disclosed subject matter will become apparent to those skilled in the art from the following detailed description, which shows and describes illustrative embodiments of the disclosed subject matter. Accordingly, the drawings and detailed description are to be regarded as illustrative in nature and not restrictive.

### BRIEF DESCRIPTION OF THE DRAWINGS

The above-mentioned and other features and advantages of this disclosure, and the manner of attaining them, will become more apparent and will be better understood by reference to the following description of embodiments of the invention taken in conjunction with the accompanying drawings, wherein:
FIG. 1 illustrates a left front perspective view of an exemplary vehicle of the present disclosure;
FIG. 2 illustrates a top view of the exemplary vehicle of FIG. 1;
FIG. 3 illustrates a top view of an exemplary frame of the exemplary vehicle FIG. 1;
FIG. 4 illustrates the exemplary positions of various components of an exemplary powertrain of the exemplary vehicle of FIG. 1;
FIG. 5 illustrates a left perspective view of an exemplary battery enclosure of the exemplary vehicle of FIG. 1;
FIG. 6 illustrates a detail left perspective view of a portion the battery enclosure of FIG. 4;
FIG. 7 illustrates a cross-sectional view of the battery enclosure through line 7-7 of FIG. 6;
FIG. 8 illustrates a cross-sectional view of the battery enclosure though line 8-8 of FIG. 6;
FIG. 9 illustrates an exploded view of an exemplary vent and an exemplary spark arrestor of the battery enclosure of FIG. 5;
FIG. 10 illustrates an exploded view of the spark arrestor of the battery enclosure of FIG. 5;
FIG. 11 illustrates a front left perspective view of another exemplary vehicle of the present disclosure;
FIG. 12 illustrates a left side view of an exemplary powertrain assembly and an exemplary frame assembly of the vehicle of FIG. 10;
FIG. 13 illustrates a schematic view of a pair of exemplary batteries and an exemplary battery enclosure for use with the vehicle of FIG. 11;
FIG. 14 illustrates an exemplary vent and an exemplary housing of the battery enclosure of FIG. 13;
FIG. 15 illustrates an exploded view of an exemplary coupling between the vent and the housing of the battery enclosure of FIG. 14;
FIG. 16 is a front view of the vent isolated from the housing of FIG. 14;
FIG. 17 is a rear view of the vent isolated from the housing of FIG. 14;
FIG. 18 is a side view of the vent isolated from the housing of FIG. 14 looking towards an outlet of the vent;
FIG. 19 is a top view of the vent isolated from the housing of FIG. 14;
FIG. 20 is a cross-sectional view of the vent through line 20-20 of FIG. 19;
FIG. 21 is a cross-sectional view of the vent through line 21-21 of FIG. 19;
FIG. 22 is a cross-sectional view of the vent through line 22-22 of FIG. 19;
FIG. 23 is an exploded view of the vent of FIG. 14;
FIG. 24 is a top cross-sectional view of the vent through line 24-24 of FIG. 14;
FIG. 25 is a side cross sectional view of the vent of FIG. 14;
FIG. 26 is a side view of the vehicle of FIG. 11 during a thermal runaway event;
FIG. 27 is a left perspective view of another embodiment of an exemplary battery enclosure;

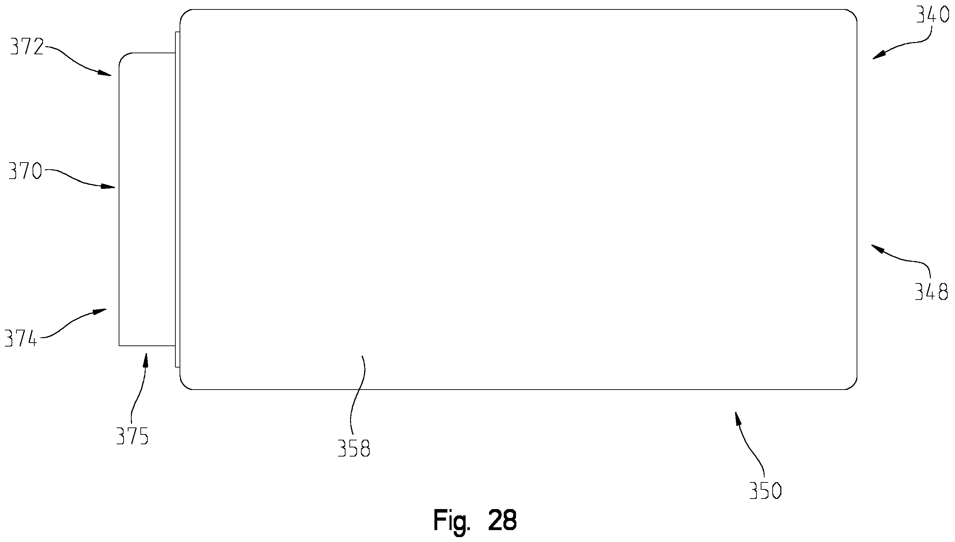

FIG. 28 is a side view of the battery enclosure of FIG. 27;
FIG. 29 is a cross-sectional view of the battery enclosure through line 29-29 of FIG. 27; and
FIGS. 30-31 are side views of the battery enclosure of FIG. 27 along a fluid line.
FIG. 32 is a side-oriented perspective view of a monitoring system of the battery enclosure of FIG. 5.
FIG. 33 is a side-oriented perspective view of an electrical system of the monitoring system of FIG. 32.
FIG. 34 is a side-oriented perspective view of a mechanical system of the monitoring system of FIG. 32.

Corresponding reference characters indicate corresponding parts throughout the several views. Although the drawings represent embodiments of the present disclosure, the drawings are not necessarily to scale, and certain features may be exaggerated in order to better illustrate and explain the present disclosure. The exemplification set out herein illustrates an embodiment of the disclosure, in one form, and such exemplifications are not to be construed as limiting the scope of the disclosure in any manner.

### DETAILED DESCRIPTION OF THE DRAWINGS

Various embodiments of the present invention will be described in detail with reference to the drawings, wherein like reference numerals represent like parts and assemblies throughout the several views. Any examples set forth in this specification are not intended to be limiting and merely set forth some of the many possible embodiments for the claimed invention. Rather, the embodiments are chosen and described so that others skilled in the art may utilize their teachings. While the present disclosure is primarily directed to a utility vehicle, it should be understood that the features disclosed herein may have application to other types of vehicles such as other all-terrain vehicles, motorcycles, snowmobiles, and golf carts.

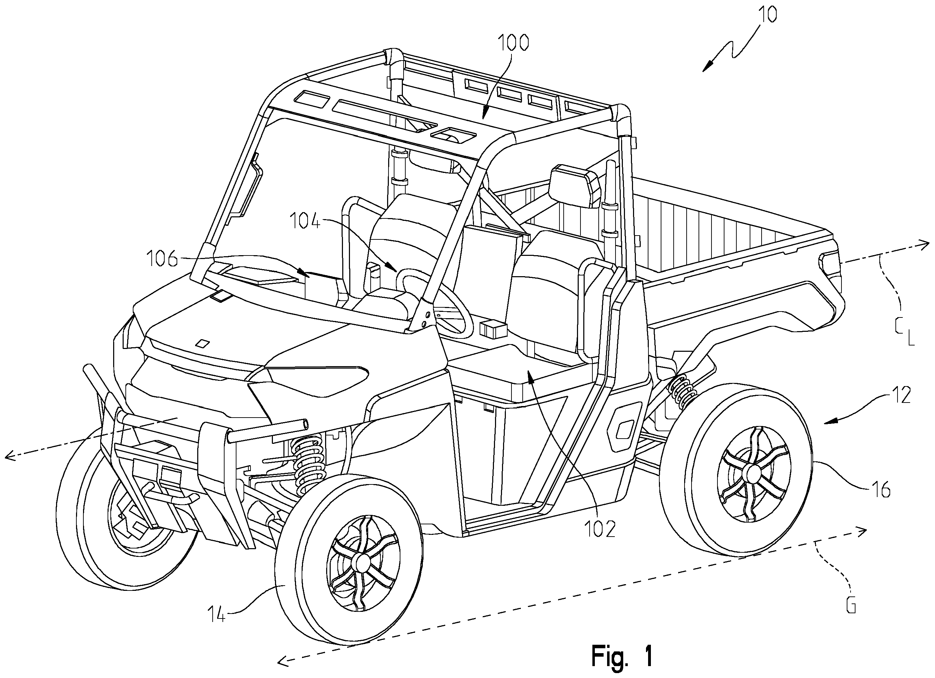

Referring to FIG. 1, an illustrative embodiment of an exemplary vehicle 10 is shown. The vehicle 10 is configured for off-road conditions. It should be appreciated that vehicle 10 is an exemplary recreational vehicle, particularly a side-by-side seating type recreational vehicle. Although an exemplary vehicle 10 is shown, it should be appreciated that other side-by-side recreational vehicles may incorporate the teachings disclosed herein. In embodiments, vehicle 10 may include the systems and layout described in in U.S. Patent Application No. 17/702,050 (Attorney Docket PLR-00TC-29460.04P), the entire disclosure of which is incorporated by reference.

Vehicle 10 includes a plurality of ground engaging members 12, illustratively front wheels 14 and rear wheels 16. Exemplary ground engaging members include skis, endless tracks, wheels, and other suitable devices which support the electric vehicle 10 relative to the ground. In one embodiment, one or more of the ground engaging members 12 may be include tracks, such as the Prospector II Tracks available from Polaris Industries Inc., located at 2100 Highway 55 in Medina, MN 55340 such as those shown in U.S. Patent Nos. 7,673,711 (Attorney Docket PLR-01-177.02P-US) and 10,118,477 (Attorney Docket PLR-09-27412.02P-US) or non-pneumatic tires, such as those shown in U.S. Patent Nos. 8,176,957 (Attorney Docket PLR-09-25371.01P) and 8,104,524 (Attorney Docket PLR-09-25369.01P).

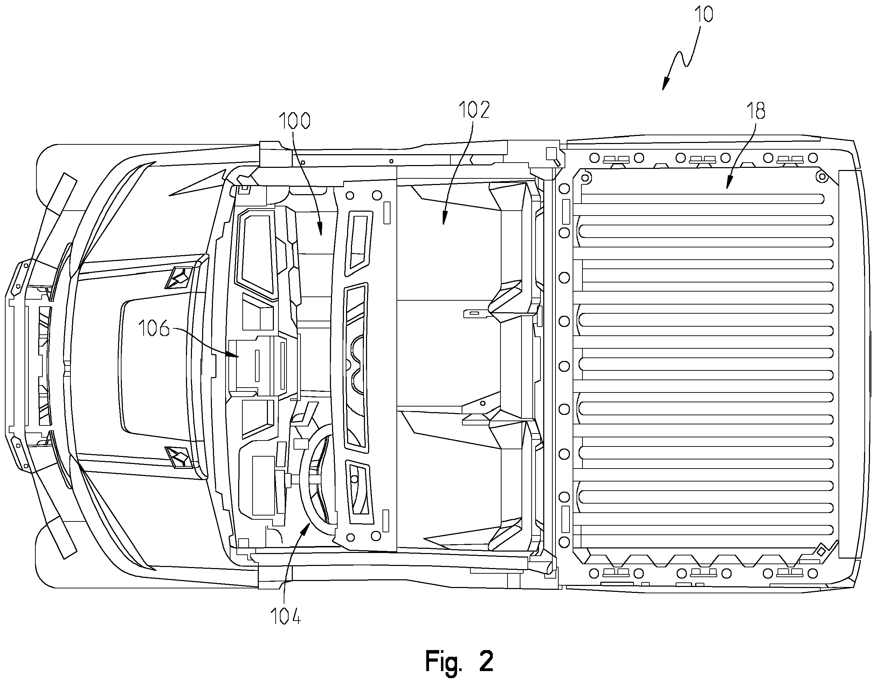

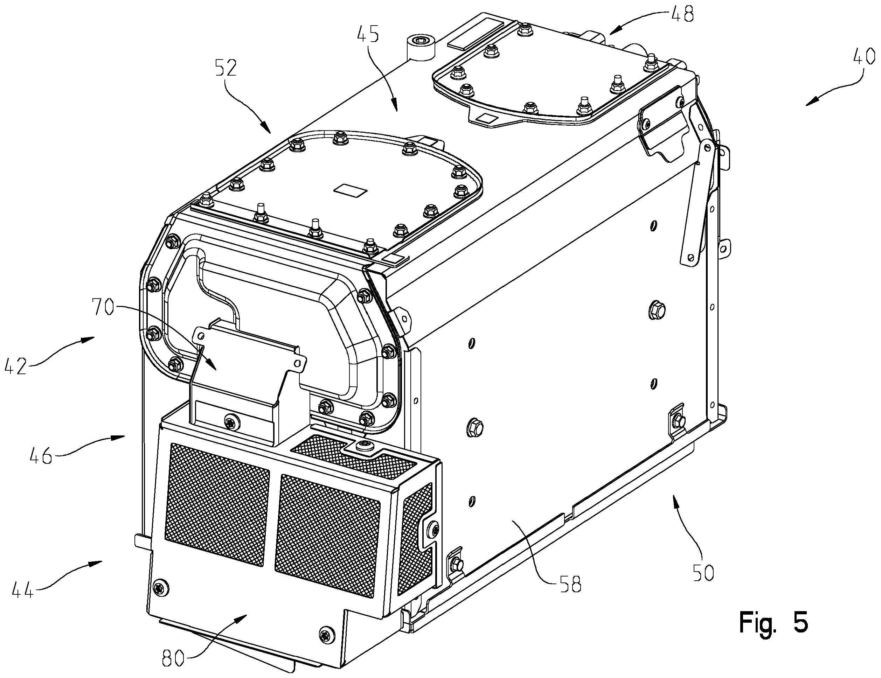

Referring to FIGS. 1 and 2, the vehicle 10 includes an operator / seating area 100 having seats 102. Seats 102 are illustrated as a bench seat but other exemplary seats such as side-by-side bucket seats may be included. Further, in embodiments, vehicle 10 may be a crew style vehicle having a second row of seating behind seats 102 to provide additional seating options. The operator / seating area 100 further includes a steering input 104, illustratively a steering wheel is operatively coupled to front wheels 14 to alter a direction of travel of electric vehicle 10. The operator / seating area 100 may also include an operator panel 106. The operator panel 106 may be located opposite of the seats 102 or opposite of the operator / seating area 100. The operator panel 106 may be in communication with a battery enclosure 40 (e.g., as shown in FIG. 5) and may be operable to issue a warning message to the operator during a thermal runaway event. In embodiments, operator panel 106 includes a light that is illuminated in the event of a thermal runaway event and/or a display which displays a message and/or icon in the event of a thermal runaway event.

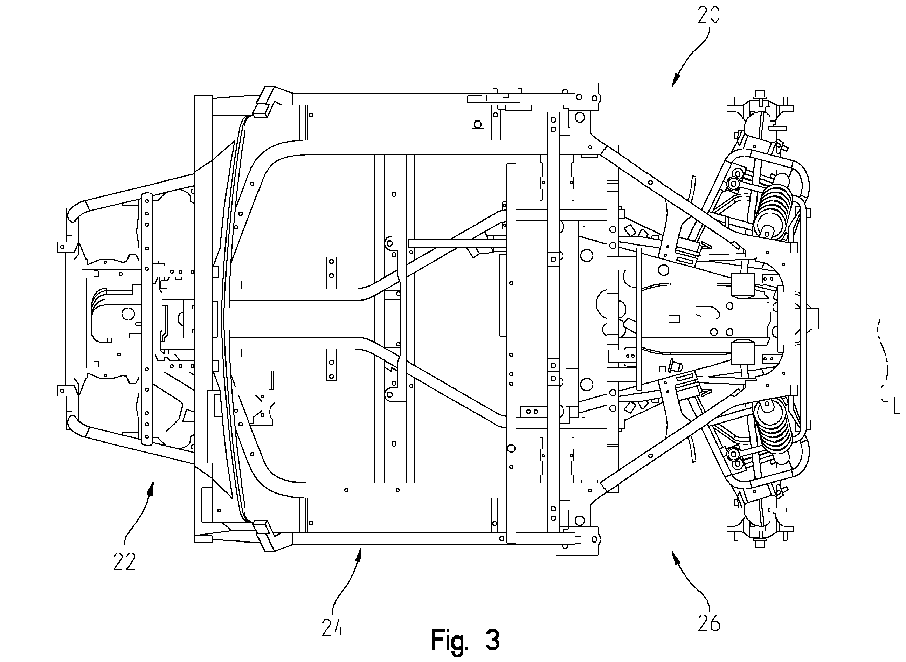

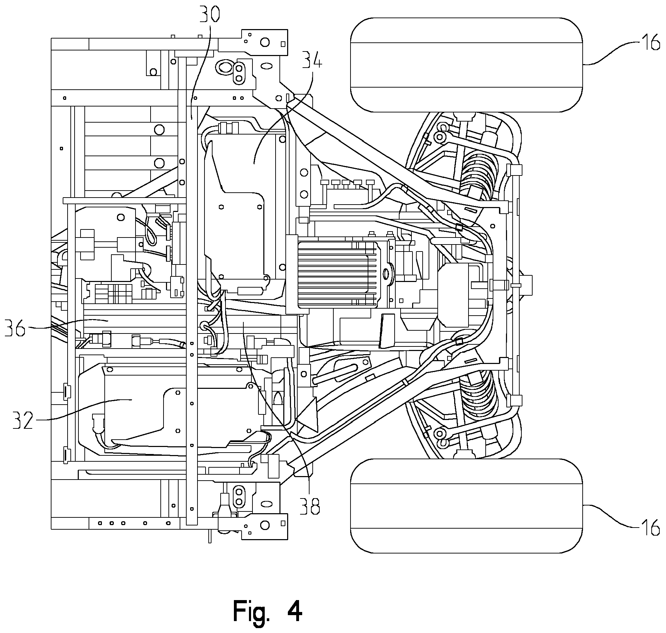

As shown in FIG. 3, vehicle 10 further includes a frame assembly 20 supported above a ground surface by the plurality of ground engaging members 12. The ground surface may be generally level or undulating dirt, grass, concrete, or other surface. Frame assembly 20 extends longitudinally and is centered laterally about a longitudinal centerline C_{L} of the electric vehicle 10. Frame assembly 20 may include cast portions, sheet metal portions, weldments, tubular components, or a combination thereof. Referring to FIG. 4, frame assembly 20 includes a front frame assembly 22, a middle frame assembly 24, and a rear frame assembly 26. Middle frame assembly 24 is positioned between front frame assembly 22 and rear frame assembly 26 and is configured to support, among other components, the seats 102 including seating for an operator and one or more passengers. The seating may include an operator/driver seat and a passenger seat; however, the seating may also include rear seats for additional passengers. Exemplary seating includes bench seats, bucket seats, and other suitable support members. Rear frame assembly 26 extends rearwardly from middle frame assembly 24 and may support a cargo box 18. Front frame assembly 22 extends forwardly of middle frame assembly 24.

Frame assembly 20 also supports a powertrain assembly 29 including electric powertrain components including numerous high voltage carrying components including chargers, batteries, electric motors, and/or a drive train that provides power from the electric motor to at least one ground engaging member 14, 16. In some embodiments, the batteries may be located underneath the operator / seating area 100.

Referring to FIG. 4, various components of electric powertrain are illustrated positioned within frame assembly 20 of electric vehicle 10. An electric power source 30 includes a plurality of batteries, illustratively battery 32 and battery 34 and a plurality of battery controllers, illustratively 36 and 38. Battery 32 is positioned under a driver portion of seat 102 and battery 34 is generally positioned on a right side of electric vehicle 10 under a back portion of a passenger portion of seats 102. In other examples, batteries 32 and 34 may be in other positions. For example, the position of batteries 32 and 34 may be selected to improve a balance of vehicle 10, provide space in selected areas of operator / seating area 100, improve heat dissipation or impact protection of batteries 32 and 34, or the like. The plurality of batteries 32 and 34 may be electrically coupled in series, in parallel, or a combination of both series and parallel connections. In some examples, the plurality of batteries 32 and 34 may be modular or expandable such that a selected number of batteries and a selected configuration of the plurality of batteries may be determined based on a predetermined function or performance of vehicle 10. The batteries 32 and 34 may each include a battery enclosure 40, as shown in FIG. 5. Battery 32 is subsequently discussed, but battery 34 may include a similar configuration and/or similar battery enclosure 40. It should be appreciated that each of batteries 32 and 34 may include multiple individual battery cells electrically coupled together in series, in parallel, or in combinations thereof.

Referring now to FIG. 5, the battery 32 may be enclosed by a battery enclosure 40. The battery enclosure 40 may comprise metallic materials such as steel, e-coated steel, and/or stainless steel. In embodiments, the battery enclosure 40 is non-flammable. The battery enclosure 40 may include an upper half 42, a lower half 44, a top potion 45, a front portion 46, a back portion 48, a first side portion 50, and a second side portion 52. The battery enclosure 40 may be configured for managing a debris 54 and a gas 56 from the at least one battery 32 during a thermal runaway event. The thermal runaway event may occur when the battery 32 overheats, when the battery 32 is overcharged, and/or when the battery 32 is punctured or otherwise damaged. During the thermal runaway event, gases 56 such as hydrogen, carbon monoxide, and carbon dioxide may be generated and released from the battery 32. The battery 32 may also decompose into debris 54 and the debris 54 may be hot and flammable when released into an oxygen-rich environment outside of the battery enclosure 40.

The battery enclosure 40 may be adapted to manage the debris 54 and the gas 56 generated during the thermal runaway event. In some embodiments, the battery enclosure 40 may further be able to detect a threshold volume or concentration of the gas 56 generated within the interior 60 of the battery enclosure 40 and issue a warning when the threshold volume or concentration of the gas 56 is detected. The battery enclosure 40 may manage the gas 56 and the debris 54 by venting the gas 56 (e.g., any of hydrogen gas, carbon monoxide, and/or carbon dioxide) from the interior 60 of the battery enclosure 40 to the exterior of the battery enclosure 40. The gas 54 may then be vented outwardly to an outside environment, which may be away from the vehicle 10. The debris 54 may be released from the interior 60 of the battery enclosure 40 to an exterior of the battery enclosure 40. The debris 54 may exit the battery enclosure 40 at a high velocity, so the battery enclosure 40 may be adapted to slow the velocity of at least a portion of the debris 54 and capture the at least a portion of the debris 54 within a portion of the battery enclosure 40. This may be accomplished using a housing 40, a vent 70, and a spark arrestor 80, all of which are subsequently described.

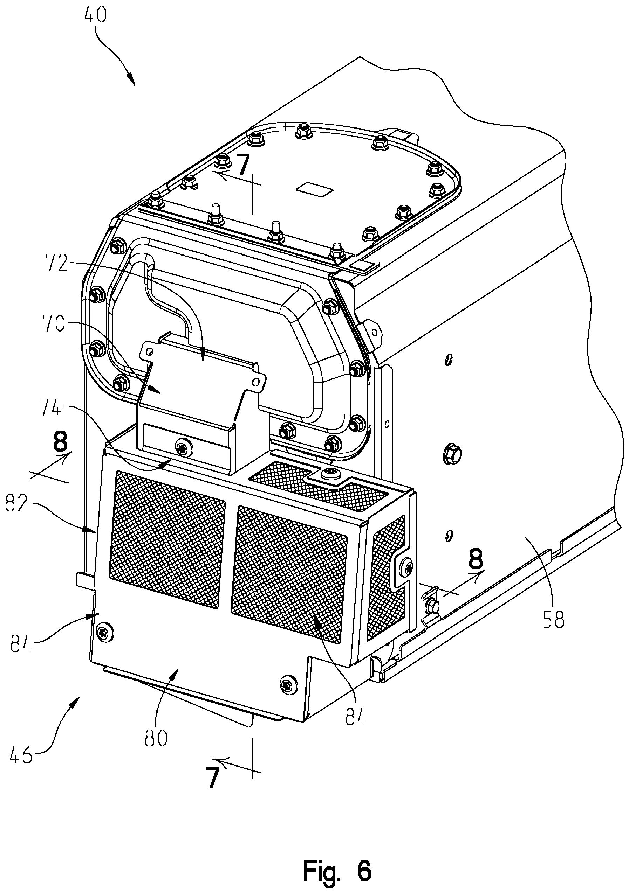

Referring now to FIG. 6, the battery enclosure 40 may include a housing 58 including an interior 60. The housing 58 may be adapted to receive the at least one battery 32 in the interior 60 of the housing 58. The battery enclosure 40 may also include a vent 70 extending from the housing 40 and the vent 70 may include a first end 72 and a second end 74. The first end 72 of the vent 70 may be in fluid communication with the interior 60 of the housing 58. The second end 74 of the vent 70 may be in fluid communication with a spark arrestor 80. The spark arrestor 80 may include a first region 82 to vent the gas 56 and a second region 84 positioned to capture the debris 54. In some embodiments, the battery 32, the vent 70, and the spark arrestor 80 of the battery enclosure 40 may be positioned under the seating area 100. The battery enclosure 40, the vent 70, and the spark arrestor 80 may be configured to control and contain sparks and/or ignition of the at least one battery 32 during the thermal runaway event. The battery enclosure 40 may include a single vent 70 and a single spark arrestor 80, or a plurality of vents 70 and spark arrestors 80 as needed. The vent 70 and the spark arrestor 80 will be subsequently discussed in more detail.

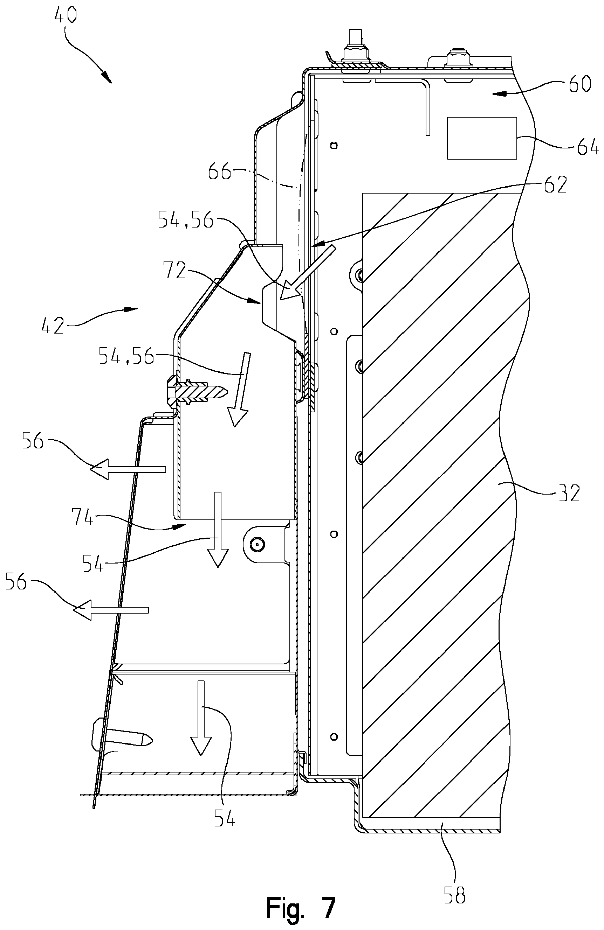

FIG. 7 is a cross-section of FIG. 6 shown through line 7-7. As shown in FIG. 7, the vent 70 may be in fluid communication with the interior 60 of housing 40 through at least one opening 62 in an upper half 42 of the housing 58. The at least one opening 62 may be located on a side portion of the upper half 42 of the housing 58. However, in other embodiments, the at least one opening 62 may be positioned on any of the top portion 45, the back portion 48, or the first or second side portions 50, 52 of the battery enclosure 40. By having the at least one opening 62 of the battery enclosure 40 located on an upper half 42 of the housing 58, the battery enclosure 40 may be at least partially submergible. The battery enclosure 40 may be partially submergible in a fluid or fluid based mixture, which may include but is not limited to, water or mud.

FIG. 7 further illustrates the at least one battery 32 enclosed within the interior 60 of the housing 58. The interior 60 of the housing 58 may include a sensor 64 positioned within the interior 60 of the housing 58. The sensor 64 may be positioned near the at least one opening 62 of the housing 58 and/or within the upper half 42 of the housing 58 to monitor the interior 60 of the housing 58 for the thermal runaway event. The sensor 64 may include, but is not limited to, a hydrogen sensor configured to detect a hydrogen gas, a carbon monoxide sensor configured to detect a carbon monoxide gas, a carbon dioxide detector to detect carbon dioxide gas, or any combination thereof. The sensor 64 may also include a temperature sensor (e.g., thermocouples or thermistors) configured to detect a temperature rise within the battery enclosure 58. The sensor 64 may be configured to detect the thermal runaway event. In some embodiments, the sensor 64 or a controller coupled to the sensor 64 may be operable to activate an alarm based on a threshold volume of the gas present within the interior 60 of the housing 58 and/or a threshold temperature within the interior 60 of the housing 58, any of which may signal initiation and/or progression of the thermal runaway event. The threshold volume of the gas may be between about 5% to about 10%, or optionally 6%. The threshold temperature may be between about 60° to 70°C, or optionally about 65°C. The sensor 64 or controller coupled to the sensor 64 may be in communication with a vehicle controller to emit a sound once the threshold volume of gas and/or threshold temperature is detected by the sensor 64 to warn a rider of the thermal runaway event. The sensor 64 or controller coupled to the sensor 64 may additionally or alternatively be in communication with the operator panel 106 of the vehicle 10, where the operator panel 106 is configured to display a warning message based on a reading from the sensor 64.

Further to FIG. 7, the flow path of the debris 54 and the gas 56 is shown. The debris 54 and the gas 56 may be formed within the interior 60 of the housing 58 and flow from the interior 60 of the housing 58 to the exterior of the housing 58. In some embodiments, a sacrificial diaphragm 66 is positioned to block the debris 54 and/or the gas 56 from flowing from the interior 60 of the housing 58 to the second end 74 of the vent 70. The sacrificial diaphragm 66 may be positioned at any location between the interior 60 of the housing 58 and the second end 74 of the vent 70. One such location for the sacrificial diaphragm 66 may be between the at least one opening 62 of the housing 58 and the first end 72 of the vent 70, as shown in FIG. 7. During a thermal runaway event, the sacrificial diaphragm 66 may be ruptured such that the debris 54 and/or the gas 56 is able to flow out from the interior 60 of the housing 58 to the exterior of the housing 58. The sacrificial diaphragm 66 may be adapted to rupture due to the thermal runaway event, which may include, but is not limited to, an increase in pressure and/or heat within the interior 60 of the housing 58. The sacrificial diaphragm may be made of a polymeric material including, but not limited to, polytetrafluoroethylene (PTFE). During the thermal runaway event, the debris 54 and the gas 56 may be generated by the at least one battery 32 in the battery enclosure 40. The debris 54 and the gas 56 may exit the housing at a high exit velocity. The debris 54 and the gas 56 may first flow out from the interior 60 of the housing 58 to the first end 72 of the vent 70 as illustrated by the arrows. The vent 70 may be angled downward relative to the at least one opening of the housing 58 such that the debris 54 and the gas 56 turn direction, which may slow down the exit velocity. The debris 54 and the gas 56 may then flow from the first end 72 of the vent 70 to the second end 74 of the vent 70 as shown by the arrows. The debris 54 and the gas 56 may then flow from the second end 74 of the vent 70 into the spark arrestor 80 as shown by the arrows. The gas 56 may be vented out from the spark arrestor 80 as shown by the arrows. At least a portion of the debris 54 may continue to flow toward a bottom of the spark arrestor 80 such that it is captured within the spark arrestor 80.

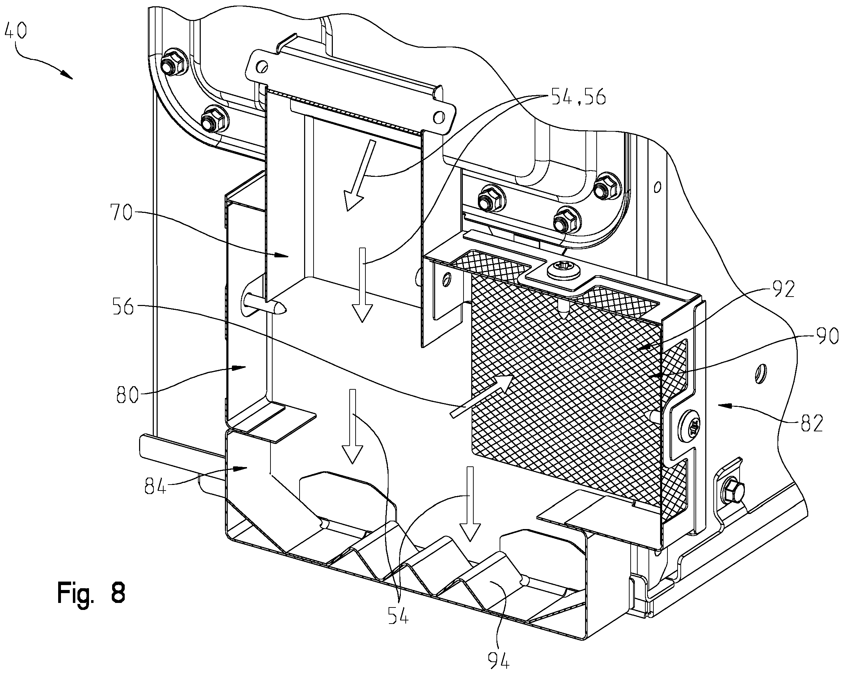

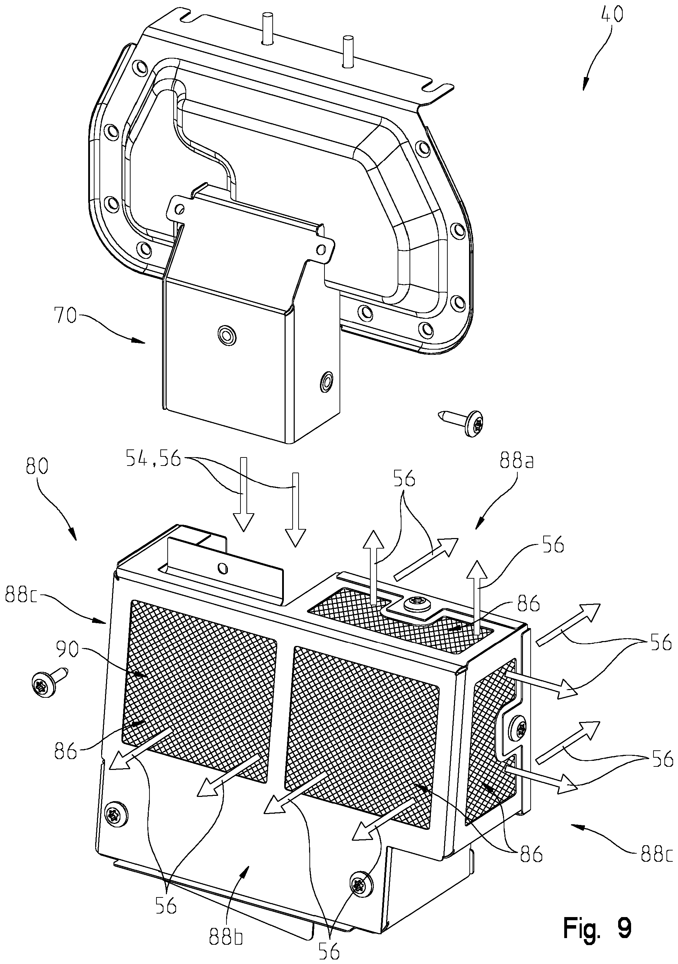

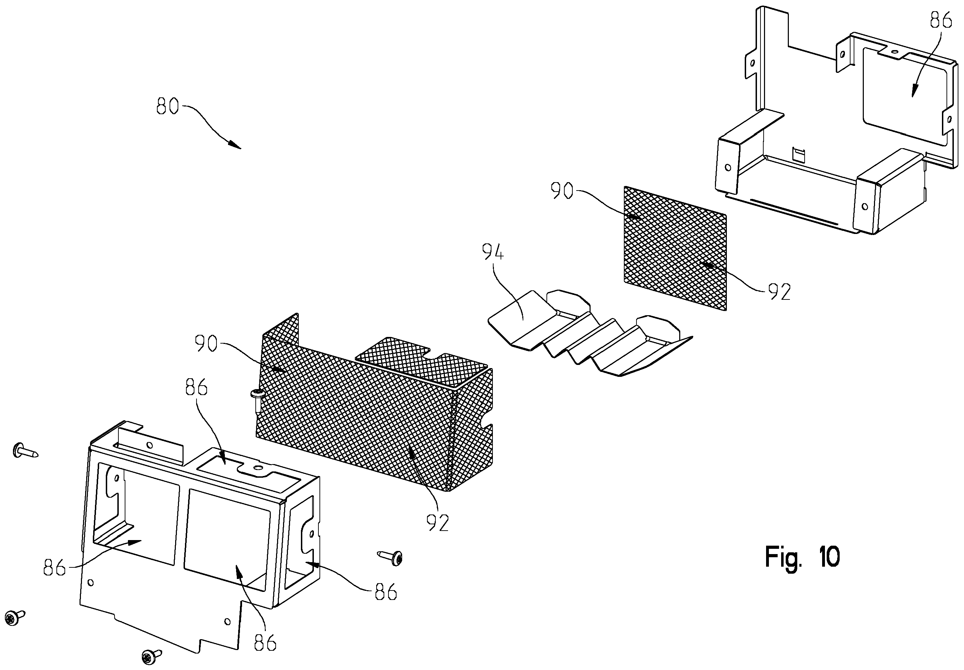

FIG. 8 shows a cross section of the vent 70 and spark arrestor 80 though line 8-8 of FIG. 6. FIG. 8 shows the flow path of the debris 54 and the gas 56, similar to FIG. 6, through the vent 70 and the spark arrestor 80. As shown in FIGs. 5-10, the vent 70 and the spark arrestor 80 may be a rectangular or rectilinear in shape, but other shapes such as curved shapes, or curved edges are also contemplated. The spark arrestor 80 may include a first region 82 positioned to vent the gas 56 and a second region 84 positioned to capture the debris 54. In some embodiments, the first region 82 may be larger than the second region 84, but the opposite configuration is also contemplated. The first region 82 of the spark arrestor 80 may be positioned at an upper portion of the spark arrestor 80. The first region 82 may include at least one window 86 located along a perimeter of the first region 82. The at least one window 86 may be located on a top portion 88a, a front portion 88b, and/or a side portion 88c of the spark arrestor 80. The at least one window 86 may be covered by a mesh covering 90. The mesh covering 90 may be coupled to the spark arrestor 80. The mesh covering 90 may define a plurality of openings 92. The plurality of openings 92 may allow the gas 56 to vent out from the spark arrestor 80 and out toward an outside environment. In embodiments, the plurality of openings 92 may have a size up to about 550 micron. In embodiments, the plurality of openings 92 may have a size of at least 500 microns up to about 550 microns. The plurality of openings 92 may be sized such that they are smaller than at least a nominal sized portion of the debris 54 such that the at least a nominal sized portion of the debris 54 cannot escape through the plurality of openings 92 or become stuck within the plurality of openings 92. The debris 54 is instead directed to travel toward the second region 84 of the spark arrestor 80. The plurality of openings 92 may also be sized to control a rate of flow of the gas 56 as it exits the spark arrestor 80. An advantage, among others, of controlling the rate of flow of gas 56 towards openings 92 is that debris 54 is more likely to continue to fall toward the second region 84 of the spark arrestor 80 instead of being carried towards the plurality of openings 92.

The second region 84 of the spark arrestor 80 may be positioned to capture at least a portion of the debris 54 within the spark arrestor 80. The second region 84 of the spark arrestor 80 may be positioned on a lower portion of the spark arrestor 80, or below the first region 82 of the spark arrestor 80. The second region 84 may be sized to capture between about 10 pounds to about 20 pounds of debris 54, or optionally about 12 pounds to about 16 pounds of debris 54 within the spark arrestor 80. The targeted volume and/or weight of the debris 54 captured within the second region 84 may drive the size of the second region 84 relative to the first region 82. Once the second region 54 is full of debris 54, the debris 54 may start to fill the first region 82 and may block the plurality of openings 86 and reduce the volume the gas 56 venting out from the first region 82. The spark arrestor 80 may define a closed or solid perimeter about the second region 84 to capture the debris 54. The second region 84 of the spark arrestor 80 may include a cushion 94. The cushion 94 may be located at or along a bottom of the second region 84. The cushion 94 may be coupled (e.g., permanently or removably coupled) to the spark arrestor 80 via welding, fasteners, non-flammable adhesives, or the like. In other embodiments, the cushion 94 may be integral, or one body, with the spark arrestor 80. The cushion 94 may include, but is not limited to, steel wool, mesh gauze, or another textured material. The cushion 94 may additionally or alternately include a non-linear profile, including but not limited to, an accordion-like shape, a zig-zag shape, a honeycomb shape, or a serpentine shape. The use of textured materials and/or non-linear profiles may slow a velocity of the debris 54 upon contact and allow at least a portion of the debris 54 to be captured within the second region 84. The spark arrestor 80 may be able to capture debris 54 such that the debris 54 is not released to the outdoor environment and not released proximate to the operator or the operator seat.

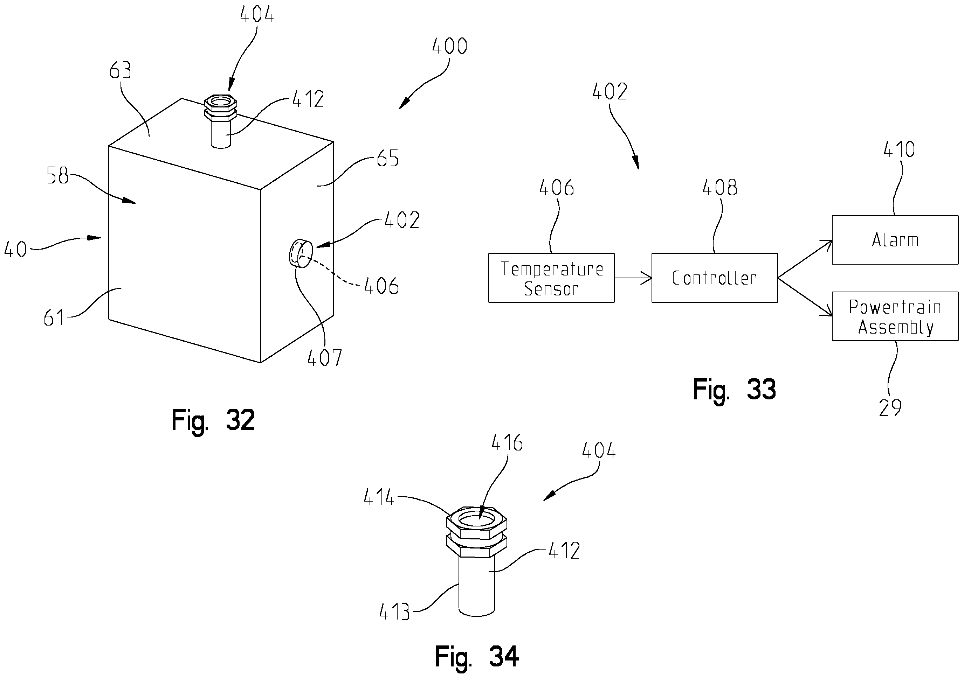

Turning to FIG. 32, in some embodiments, a monitoring system 400 is used with battery enclosure 40. Monitoring system 400 may be used in addition to sensor 64 as described above. Monitoring system 400 may include both an electrical system 402 and a mechanical system 404. Both electrical system 402 and mechanical system 404 may be used together for two levels of monitoring in the event that one of electrical system 402 or mechanical system 404 fail. In the event where electrical system 402 fails, mechanical system 404 may deploy, and vice versa.

Turning to FIG. 33, electrical system 402 includes at least one temperature sensor 406. In embodiments, multiple temperature sensors 406 are contemplated. Temperature sensor 406 may be positioned on an exterior 61 of housing 58 and monitors a temperature of exterior 61 which thermally conducts heat from the interior. In embodiments, housing 58 is made of steel. Temperature sensor 406 may be positioned on a top portion 63 of housing 58 or on a side portion 65 of housing 58. The temperature of exterior portion 61 is indicative of a temperature of the battery 32 within the housing 58. In other embodiments, temperature sensor 406 is positioned on the interior 60 of the housing 58 and monitors a temperature of interior 60. Temperature sensor 406 may have a protective cover 407 (see FIG. 32) to protect from water, mud, or other outdoor elements. In other embodiments, temperature sensor 406 is waterproof for protection from outdoor elements. The temperature sensor 406 is operatively coupled to a controller 408. In thermal runaway events, the temperature of the battery 32 increases, and the temperature of both the interior 60 and exterior 61 of housing 58 increase in turn. In embodiments, temperature sensor 406 measures a temperature and sends a signal to controller 408 indicative of the measured temperature. In other embodiments, controller 408 monitors an electrical characteristic of temperature sensor 406, such as a voltage or resistance, and based thereon determines a corresponding measured temperature. In either case, when the measured temperature satisfies a preset temperature characteristic, controller 408 may take one or more actions, such as described herein. Exemplary temperature characteristics include the measured temperature exceeding a threshold value, an average measured temperature over a set time period exceeding a threshold value, and other suitable characteristics. Exemplary threshold temperature values may be in the range of about 60°C to about 70°C, or optionally about 65°C. In embodiments, the functionality of controller 408 is performed by multiple controllers operatively coupled together. For instance, temperature sensor 406 may include a controller that determines if the measured temperature satisfies a preset temperature characteristic and only sends a signal to the illustrated controller 408 in response to such a determination. Exemplary controllers include software executing on one or more programmable processors, application-specific integrated circuits, field-programmable gate arrays, hardwired logic, or combinations thereof.

Controller 408 may be operatively coupled to an alarm 410 of vehicle 10, and/or may be operatively coupled to at least one component of the powertrain assembly 29 of vehicle 10 such as the engine, motor, or electric power source 30. When controller 408 determines the measured temperature satisfies the preset temperature characteristic, controller 408 may activate alarm 410 to warn the occupants of vehicle 10 of the thermal runaway event. Alarm 410 may sound a noise (e.g., a voice or a siren) and/or display a written message on operator panel 106 of vehicle 10. In some embodiments, upon determining the measured temperature satisfies the preset temperature characteristic controller 408 may be configured to stop power flow to the powertrain assembly 29 to stop motion and/or operation of vehicle 10.

Turning to FIG. 34, mechanical system 404 includes at least one pressure control device 412, though use of more than one pressure control device 412 is contemplated. Pressure control device 412 is illustratively positioned on top portion 63 of the exterior 61 of housing 58 in FIG. 2, but may be placed on other sides. Pressure control device 412 may include a cover 414. In embodiments, cover 414 may be made of a brass-aluminum alloy. Cover 414 may include a center 416 having a material configured to be broken upon exposure to high pressures. In some embodiments, the material of center 416 is configured to melt upon exposure at or above the threshold temperature. Exemplary threshold temperature values may be in the range of about 60°C to about 70°C, or optionally about 65°C. When pressure builds up within housing 58, material of center 416 breaks to bring an interior of housing 58 into fluid communication with an exterior of housing 58 to relieve pressure therein. In embodiments, pressure control device 412 includes a pressure valve 413, such as a poppet valve or a gas pressure release valve, which extends through the empty center 416 of cover 414 upon removal of the material. In embodiments where the material of center 416 is broken, used pressure control device 412 may be a single-use system. After use, used pressure control device 412 is removed from housing 58 and replaced with a new pressure control device 412 that has the material of center 416 intact. Housing 58 can continue to be used with the new pressure control device 412.

In some embodiments, the pressure control device 412 may be configured to activate prior to the thermal runaway event to relieve pressure prior to gas 56 and debris 54 exiting housing 58 via vent 70 of battery enclosure 40. In other embodiments, pressure control device 412 may be incorporated as part of vent 70. For example, cover 414 may be sacrificial diaphragm 66.

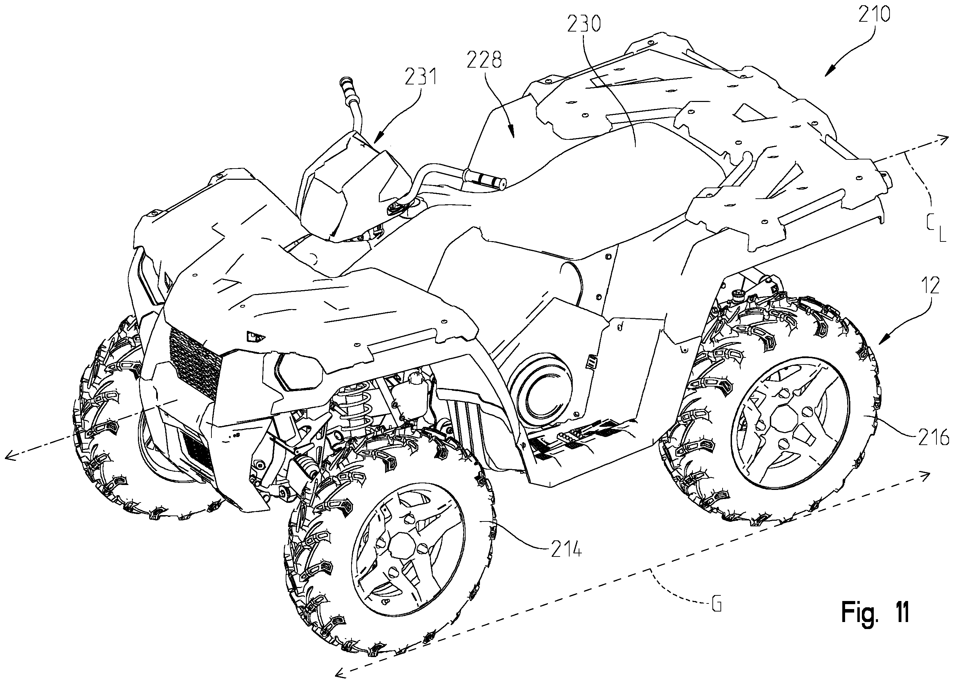

Referring to FIG. 11, an illustrative embodiment of another utility vehicle 210 is shown which is configured to traverse a variety of off-road terrains, including mud, rocks, dirt, and other trail or off-road conditions. Vehicle 210 may be referred to as an all-terrain vehicle ("ATV") or a straddle seat type vehicle and the vehicle 210 is configured for travel over various terrains or surfaces. More particularly, vehicle 210 may be configured for military, industrial, agricultural, or recreational applications. Other straddle type seat vehicles include snowmobiles, motorcycles, snow bikes, and other types of straddle seat vehicles.

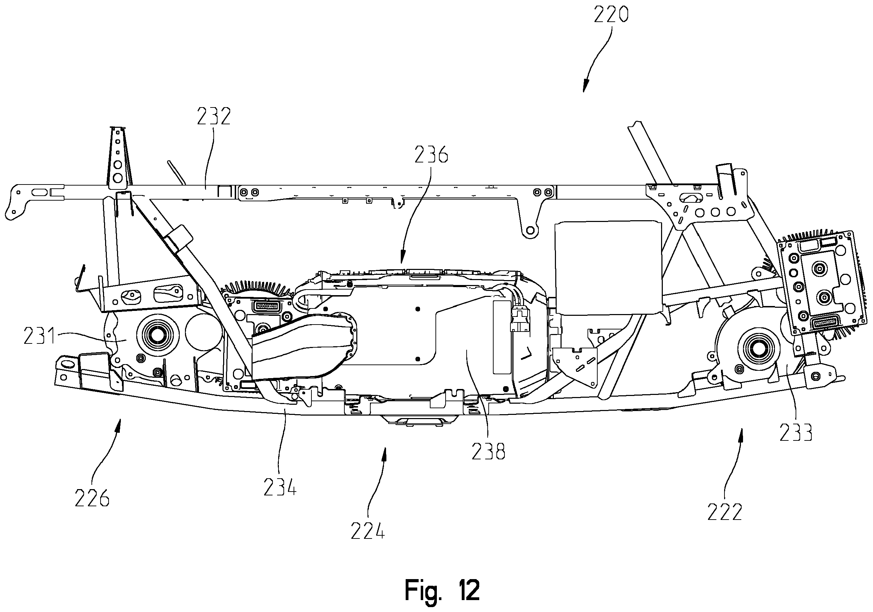

Vehicle 210 includes a plurality of ground-engaging members 212, including front ground-engaging members 214 and rear ground-engaging members 216, and a frame assembly 220 including a front frame portion 222, a middle frame portion 224, and a rear frame portion 226. As shown in FIG. 12, the vehicle 210 extends between front and rear ground-engaging members 214, 216 in a longitudinal direction along a longitudinal vehicle centerline C_{L}. More particularly, frame assembly 220 is supported by front and rear ground-engaging members 214, 216 on a ground surface G and the frame assembly 220 extends longitudinally between front and rear ground-engaging members 214, 216 along longitudinal centerline C_{L}.

The frame assembly 220 supports an operator area 228 which includes at least one seat 230, which may be a straddle seat, having a single seating position of an operator or multiple seating position for an operator and a passenger.

As shown in FIG. 12, frame assembly 20 includes upper longitudinal members 232 and lower longitudinal members 234. Upper longitudinal members 232 may be coupled to each other through various braces, cross-members, or brackets. Similarly, lower longitudinal members 234 may be coupled to each other through braces, cross-members, or brackets. Upper and lower longitudinal members 232, 234 are configured to support components of vehicle 210; for example, upper longitudinal members 232 may support seat 230 while lower longitudinal members 234 may support components of powertrain assembly 236. The powertrain assembly 236 of vehicle 210 may be an electric powertrain assembly including at least one battery 238. The at least one battery 238 may be positioned underneath the operator seat 230. Various embodiments of portions of powertrain assembly 236 may be disclosed further in U.S. Patent Application Serial No. 17/232,739, filed on April 16, 2021 (Attorney Docket No. PLR-00PT-27231.02P-US), the entire disclosure of which is expressly incorporated by reference herein. Additionally, various aspects of vehicle 220 may be disclosed in U.S. Patent Application Serial No. 17/098,185, filed on November 13, 2020 (Attorney Docket No. PLR-02-29448.02P-US), the entire disclosure of which is expressly incorporated by reference herein.

As illustrated in at least FIG. 12, the at least one battery 236 may be positioned low such that a majority of battery 238 is positioned below upper longitudinal members 234. Illustratively, an upper portion of battery 238 may be generally longitudinally aligned with an upper surface of front and rear differentials 231, 233 such that the vertical extent of battery 238 on vehicle 210 is approximately the same as the vertical extent of front and rear differentials 231, 233 thereby configuring such heavier components of vehicle 210 lower on frame assembly 220 to decrease the center of gravity. Battery 238 may be positioned in this way because, without an internal combustion engine and a center prop shaft extending through vehicle 210, battery 238 may be supported directly on lower longitudinal members 234. The relatively low positioning of battery 238 within vehicle 210 may be beneficial for a variety of reasons. For example, it may contribute to a lower center of gravity of vehicle 210 which aids in the stability of vehicle 210 during operation. Additionally, the centralized positioning of battery 238 allows for increased footwell space for operator area 228 and increases availability for storage space in vehicle 210.

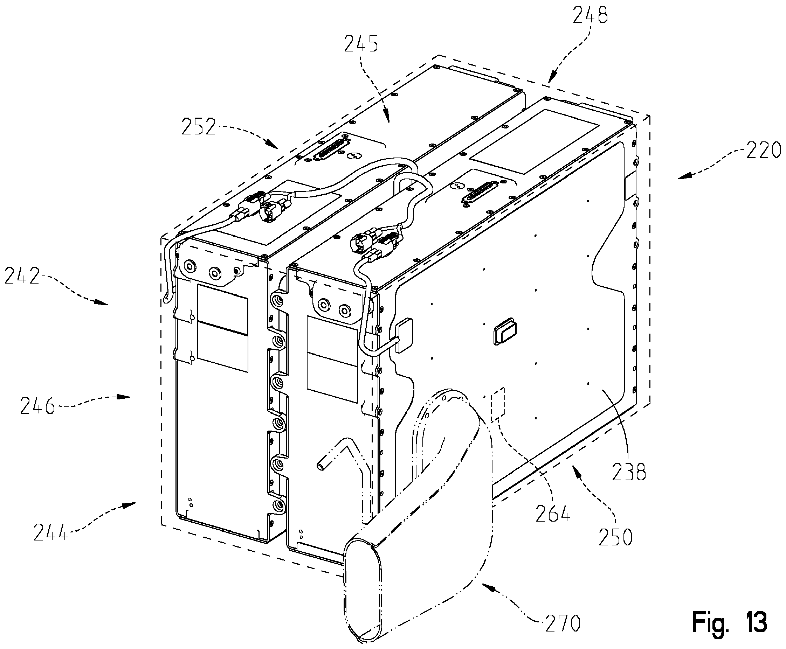

Referring to FIG. 13, the battery 238 may be enclosed by a battery enclosure 240. The battery enclosure may comprise metallic materials such as steel, e-coated steel, and/or stainless steel. The battery enclosure 240 may be made of non-flammable materials. The battery enclosure 240 may include an upper half 242, a lower half 244, a top portion 245, a front portion 246, a back portion 248, a first side portion 250, and a second side portion 252. The battery enclosure 240 may be configured for managing a debris 254 and a gas 256 from the at least one battery 238 during a thermal runaway event. The thermal runaway event may occur when the battery 238 overheats, when the battery 238 is overcharged, and/or when the battery 238 is punctured or otherwise damaged. During the thermal runaway event, gases 256 such as hydrogen, carbon monoxide, and carbon dioxide may be released. The battery 238 may also decompose into the debris 254 and the debris 254 may be hot and flammable when released into an oxygen-rich environment.

The battery enclosure 240 may be adapted to manage the debris 254 and the gas 256 generated during the thermal runaway event. In some embodiments, the battery enclosure 240 may further be able to detect a threshold volume or concentration of the gas 256 generated within the interior 260 of the battery enclosure 240 and issue a warning when the threshold volume or concentration of the gas 256 is detected. The battery enclosure 40 may manage the gas 56 and the debris 54 this by venting the gas 56 (e.g., any of hydrogen gas, carbon monoxide, and/or carbon dioxide) from the interior 260 of the battery enclosure 240 to the exterior of the battery enclosure2 40. The gas 254 may then be vented outwardly to an outside environment, which may be away from the vehicle 210. The debris 254 may be released from the interior 260 of the battery enclosure 240 to an exterior of the battery enclosure 240. The debris 254 may exit the housing 258 at a high velocity, so the battery enclosure 240 may be adapted to slow the velocity of at least a portion of the debris 254. Another portion of the debris 254 may stay at the high velocity and be directed toward the outside environment. The another portion of the debris 254 may be released to the outside environment. This may be accomplished using a housing 258 and a vent 270, all of which are subsequently described. The battery enclosure 240 may include a single vent 270, or a plurality of vents 270 as needed.

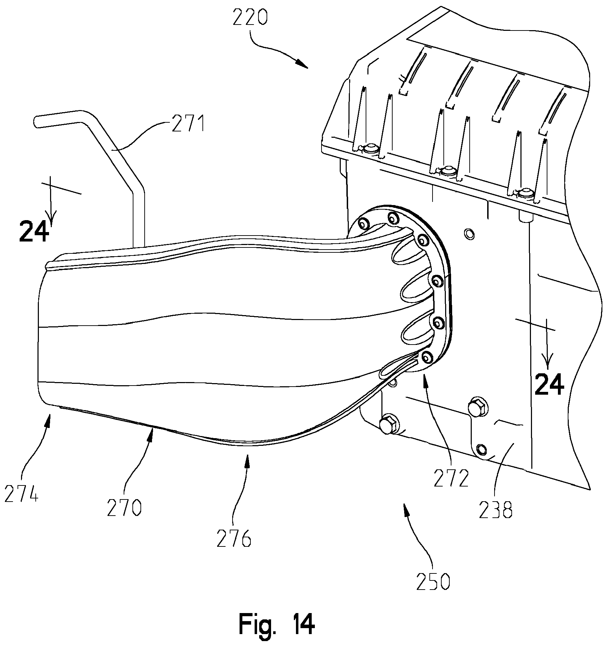

Turning to FIG. 14, the battery enclosure 240 may include a housing 258 adapted to receive the at least one battery 238 in an interior 260 of the housing 258. The interior 260 of the housing 258 may include a sensor 264 positioned within. The sensor 264 may be positioned near at least one opening 262 of the battery enclosure 240 and/or within the upper half 242 of the battery enclosure 240. The sensor 264 may be similar to the sensor 64 of FIG. 7 and the sensor 264 may be adapted to monitor the interior 260 of the housing 258 for indication of the thermal runaway event. The sensor 264 may include a gas sensor to monitor the presence of particular gases including, but not limited to, a hydrogen sensor configured to detect a hydrogen gas, a carbon monoxide sensor configured to detect a carbon monoxide gas, a carbon dioxide detector to detect carbon dioxide gas, or any combination thereof. The sensor 264 may also include a temperature sensor (e.g., thermocouples or thermistors) configured to detect a temperature rise within the interior 260 of the battery enclosure 240. In some embodiments, the sensor 264 may be operatively coupled to a controller to activate an alarm based on a threshold volume of the gas 256 (e.g., hydrogen gas) and/or a threshold increase in temperature within the battery enclosure 240 that signals initiation or progression of the thermal runaway event. The threshold volume of the gas may be between about 5% to about 10%, or optionally about 6%. The threshold temperature may be between about 60° to about 70°C, or optionally about 65°C. The sensor 264 may be in communication with a controller to emit a sound once the threshold volume of gas and/or threshold temperature is detected by the sensor 264 to warn a rider of the thermal runaway event. The sensor 264 may additionally or alternatively be in communication with the gauge and/or display 231 of the vehicle 210, such as through a vehicle controller or directly, where the gauge and/or display 231 is configured to display a warning message based on a reading from the sensor 264. The battery enclosure 240 may also include monitoring system 400 as shown and described above.

The battery enclosure 240 may also include a vent 270 extending from the housing 258. The vent 270 be coupled to the battery enclosure 240 or may be integral to, or one body of material with, the housing 258. The vent 270 may optionally include a hanger 271 that may hang from a portion of the vehicle 210 to support the weight of the vent 270. The vent 270 may include a first portion 272 defining a first opening 273 in fluid communication with the interior 260 of the housing 258. The first opening 273 may be in fluid communication with the at least one opening 262 of the housing 258. The at least one opening 262 of the housing 258 may be positioned on the upper half 242 of the battery enclosure 240 and may be positioned on one of the side portions 250, 252 of the battery enclosure 240. The vent 270 may also include a second portion 274 defining a second opening 275. The second opening 275 may be in fluid communication with an outdoor environment. In some embodiments, the first opening 273 may be larger than the second opening 275. The vent 270 may further include a central portion 276 between the first portion 272 and the second portion 274. A channel 278 may be defined within the vent 270 and between the first opening 273 and the second opening 275.

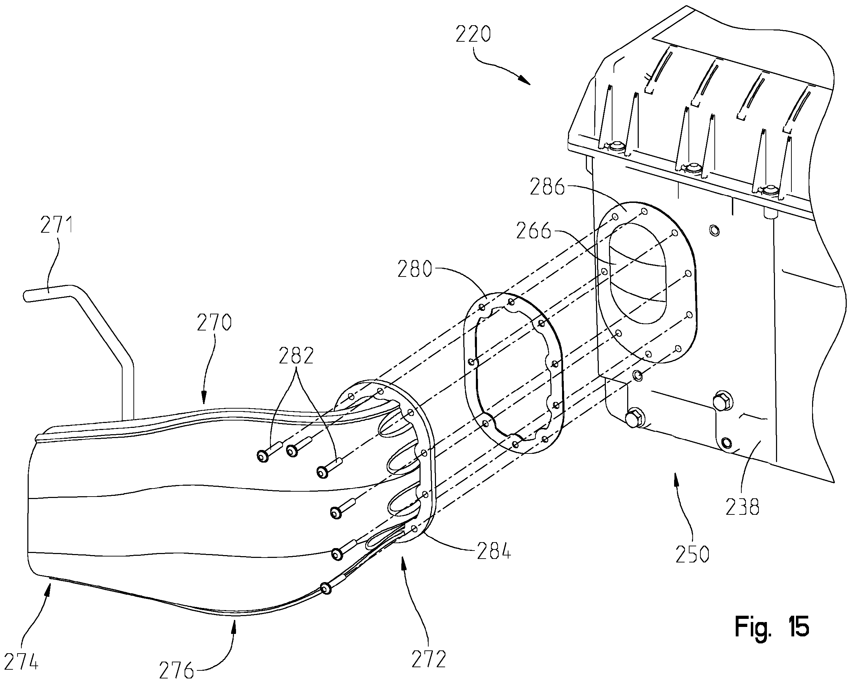

As shown in FIG. 15, in embodiments where the vent 270 is coupled to the battery enclosure 240, the vent 270 may be coupled to the housing 258 at the first portion 272 of the vent 270. The vent 270 may be welded to the housing 258 or coupled with a plurality of fasteners 282 (as illustrated). The first portion 272 of the vent 270 and the housing 258 may have complementary openings 284, 286 to receive fasteners 282. A plate 280 may be inserted between the first portion 272 of vent 270 and housing 258 to provide proper spacing and seating between the vent 270 and the housing 258. In some embodiments, the housing 258 may include a sacrificial diaphragm 266. The sacrificial diaphragm may be made of a polymeric material including, but not limited to, polytetrafluoroethylene (PTFE). The sacrificial diaphragm 266 may be positioned to block the gas 254 from flowing from the interior 260 of the housing 258 to the second portion 274 of the vent 270 prior to a thermal runaway event. The sacrificial diaphragm 266 may be configured to rupture and allow the gas 256 and the debris 254 to escape from the interior 260 of the housing 258 during the thermal runaway event. The sacrificial diaphragm 266 may be positioned between the first opening 273 of the vent 270 and the at least one opening 262 of the housing 258. However, the sacrificial diaphragm 266 may be positioned at any location between the vent 270 and the housing 258.

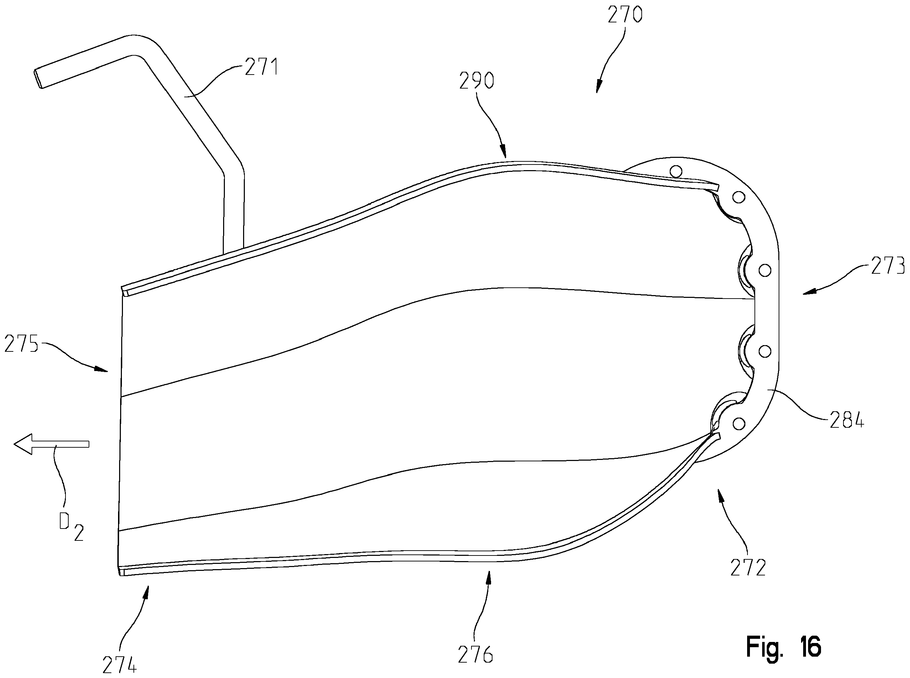

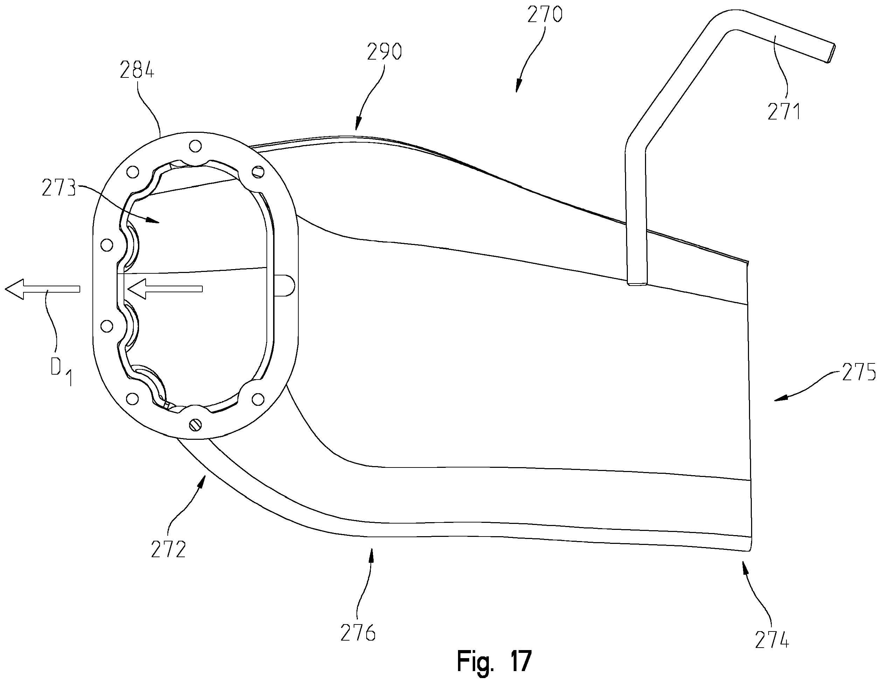

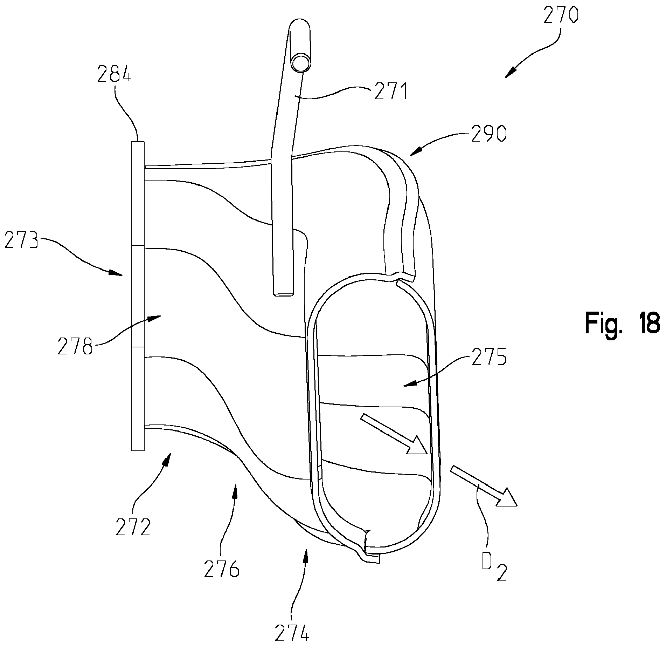

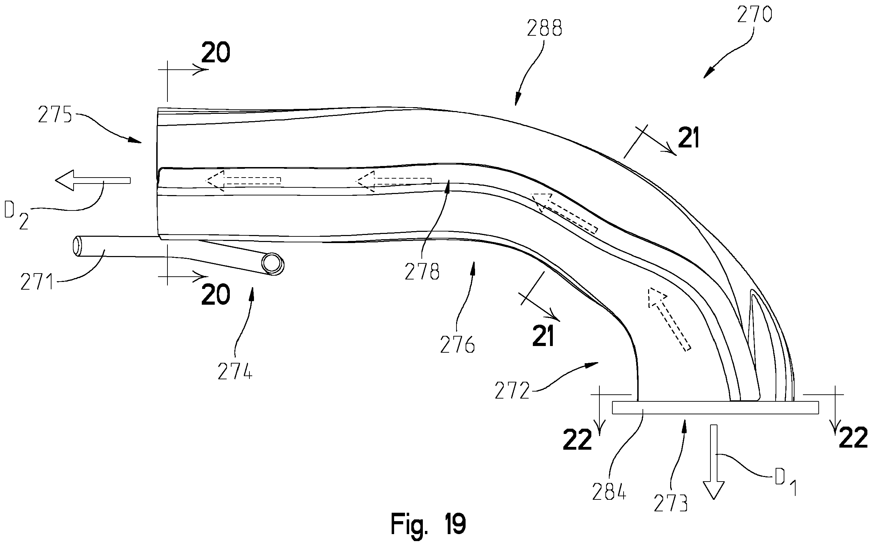

Turning to FIGS. 16-19, the vent 270 is shown isolated from the housing 258 for ease of illustration. The first opening 273 of the vent 270 may define a first direction D₁ where the first direction D₁ is normal to the first opening 273. The second opening 275 may similarly define a second direction D₂ where the second direction D₂ is normal to the second opening 275. As shown in FIG. 19, the central portion 276 may define a bend 288 such that the first direction D₁ and the second direction D₂ are angled relative to each other. In some embodiments, the first direction D₁ forms an acute angle with the second direction D₂ in a projection of the first direction D₁ and the second direction D₂ on a horizontal plane. In other embodiments, the first direction D₁ may form one of a right angle or an obtuse angle with the second direction D₂ in a projection of the first direction D₁ and the second direction D₂ on a horizontal plane. The bend 288 of the central portion 276 may facilitate the flow of the debris 254 and the gas 256 through the vent 270 in the thermal runaway event. The flow of the debris 254 and the gas 256 will be subsequently described.

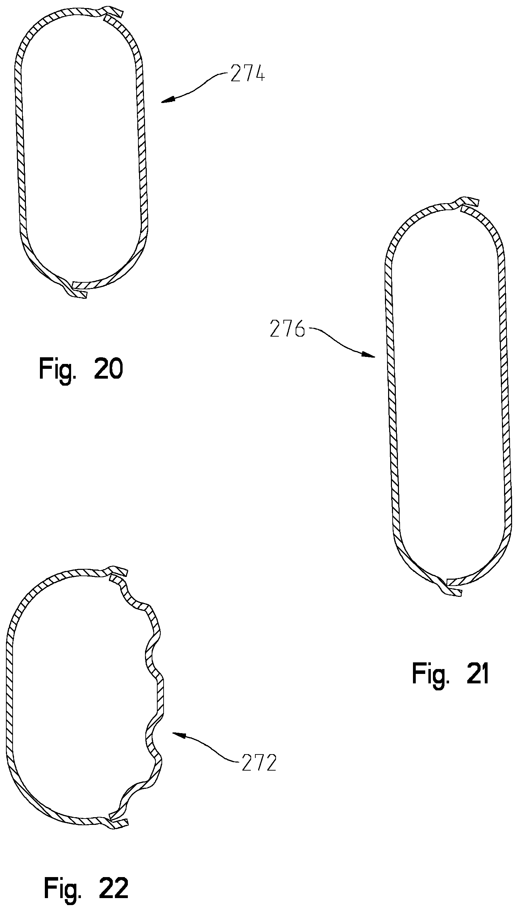

FIG. 19 illustrates a top-down view of the vent 270. FIG. 20 is a cross-sectional view of the vent 270 through line 20-20 of FIG. 19. FIG. 21 is a cross-sectional view of the vent 270 through line 21-21 of FIG. 19. FIG. 22 is a cross-sectional view of the vent 270 through line 22-22. As shown in FIG. 19 and FIG. 21, the central portion 276 may define an enlarged area 290, or a bulge, relative to the first portion 272 and the second portion 274. The vent 270 may flare upwardly, or increase in cross sectional area, between the first portion 272 and the central portion 276 to define the enlarged area 290. The vent 270 may taper downwardly, or decrease in cross sectional area, between the central portion 276 and the second portion 274. The enlarged area 290 of the central portion 276 may facilitate the flow of the debris and the gas through the vent 270 in the thermal runaway event. The relative cross-sectional area of the second portion 274, the central portion 276, and the first portion 272 are shown in FIGS. 19, 20, and 21, respectively. The relative cross-sectional areas between the first portion 272, the central portion 276, and the second portion 274 may be determined by a target flow rate of the debris 254 and the gas 256 through the channel 278. For example, the second portion 274 and central portion 276 may be sized to achieve a target exit velocity for the debris 254 and the gas 256 through the second opening 275. The target exit velocity may be the velocity needed to keep the debris 254 and the gas 256 traveling in the second direction D₂ from the second opening 275. The flow of the debris 254 and the gas 256 will be subsequently described.

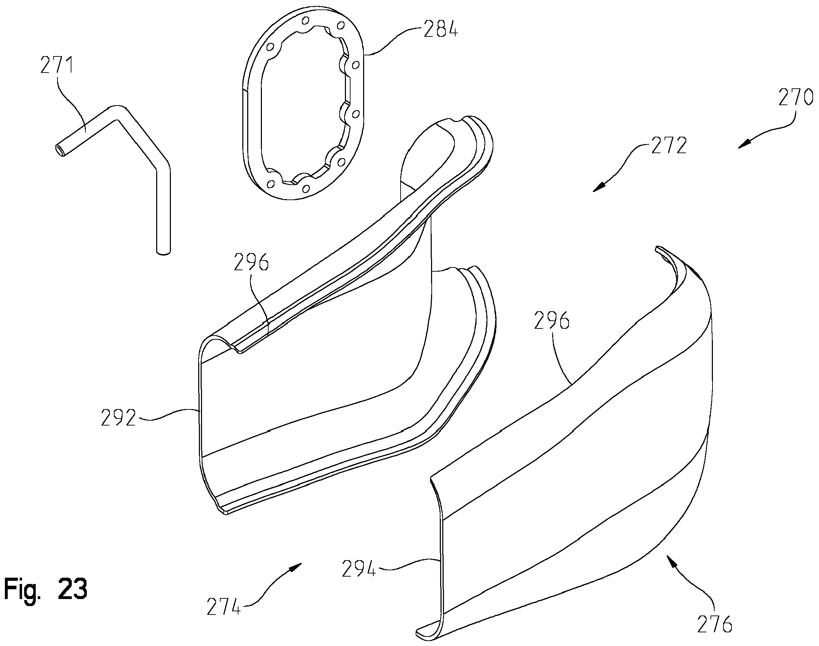

FIG. 23 illustrates an exploded view of the vent 270. The vent 270 may be comprised of a first member 292 and a second member 294. The first member 292 may be coupled to the second member 294 along a coupling line 296. The first member 292 may be welded to the second member 294 along the coupling line 296. The complementary flange portion 284 may be also coupled to the first portion 272 of the vent 270. The hanger 271 may also be coupled to the second portion 274 of the vent 270. In alternative embodiments, the vent 270 may be comprised of a single body of material, which may be formed by casting or other like processes.

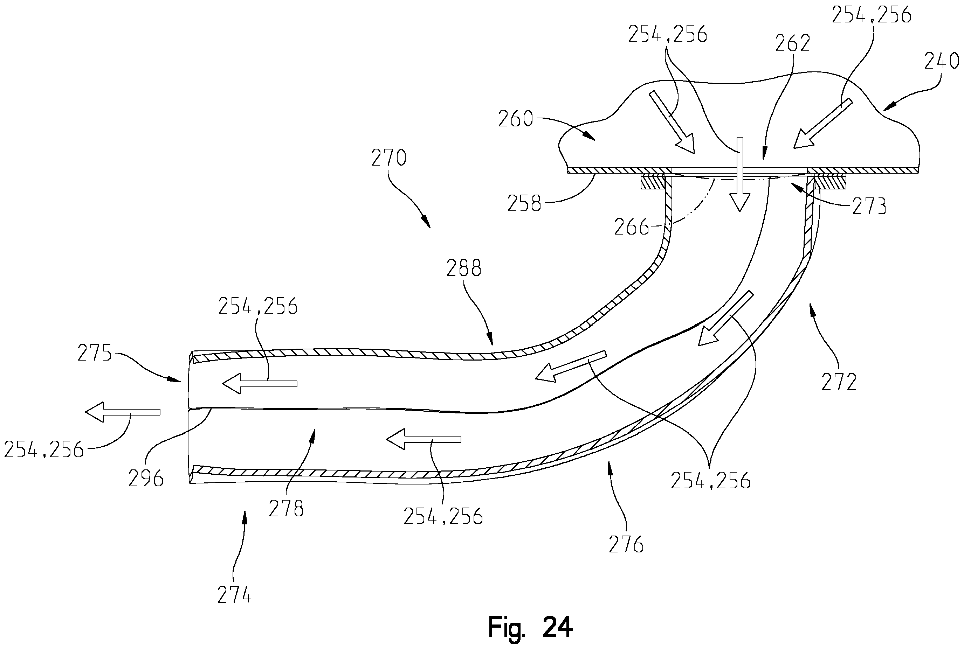

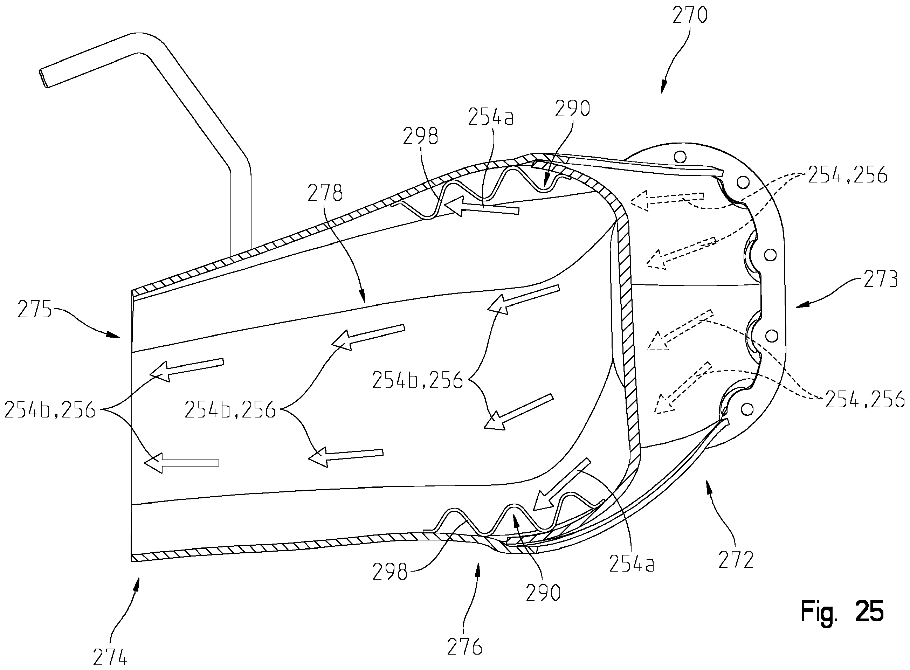

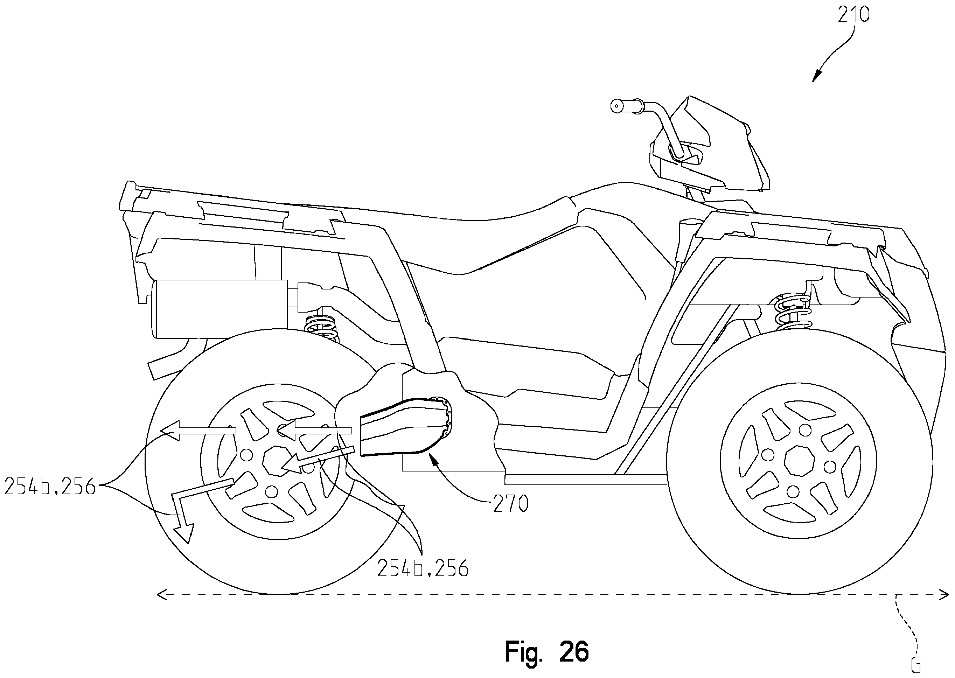

FIGS. 24-26 illustrate the flow path of the debris 254 and the gas 256 through the vent 270 during the thermal runaway event. The at least one battery 238 may form the debris 254 and the gas 256 within the interior 260 of the housing 258. The debris 254 and the gas 256 may flow from the interior 260 of the housing 258 to the exterior of the housing 258. The flow to the exterior of the housing 258 may be directed into the first opening 273 of the vent 270. In some embodiments when the sacrificial diaphragm 266 is installed, the sacrificial diaphragm 266 may be ruptured before the debris 254 and the gas 256 is able to flow from the interior 260 of the housing 258 to the first opening 273 of the vent 270. The debris 254 and the gas 256 may then flow from the first portion 272 of the vent 270 to the central portion 276 of the vent 270. When reaching the central portion 276 of the vent 270, the debris 254 and the gas 256 flow around the bend 288. The bend 288 may slow a velocity of at least a first portion of the debris 254a. For example, relatively large debris within the first portion of the debris 254a may contact the vent 270 at or proximate to the bend 288 and stop or slow down upon contact. The bend 288 may further include a cushion layer 298 within the vent 270 along a top portion of the bend 288 and/or a lower portion of the bend 288, as shown in FIG. 25. The cushion layer 298 may be located within the enlarged area 290 of the central portion 276. The cushion layer 298 may also facilitate slowing the velocity of the first portion of the debris 254a. The cushion layer 298 may cause the first portion of the debris 254a to slow down or even stop when the cushion layer 298 is contacted. In some examples, the first portion of the debris 254a may contact the cushion layer 298 and become trapped in the cushion layer 298. The central portion 276 of the vent 270 may then collect the first portion of debris 254a within the cushion layer 298 and/or the enlarged area 290 such that the channel 278 remains substantially open or un-blocked to allow a second portion of the debris 254b and the gas 256 to flow to the second opening 275. The second portion of the debris 254b may be directed toward the second opening 275 and out toward the outside environment. FIG. 26 illustrates the flow path of the second portion of the debris 254b and the gas 256 as they exit the second opening 275 of the vent. As described above, the second opening 275 of the vent 270 may have a smaller cross-sectional area than either of the first opening 273 and the central portion 276. The smaller cross-sectional area of the second opening 275 may cause the second portion of the debris 254b and the gas 256 to accelerate or increase in velocity toward the second opening 275 of the vent 270. This may virtually extend the length of the vent 270 without adding additional material to the vent 270. The second opening 275 may be adapted to direct the gas 256 and the second portion of the debris 254b downwardly toward the ground G, substantially horizontally toward the rear of the vehicle 210, or a combination of both directions. By accelerating the second portion of the debris 254b upon exit from the second opening 275, the second portion of debris 254b may exit with high enough velocity that the second portion of the debris 254b is directed away from the vehicle 210 and the vehicle 210 is not hit or damaged.

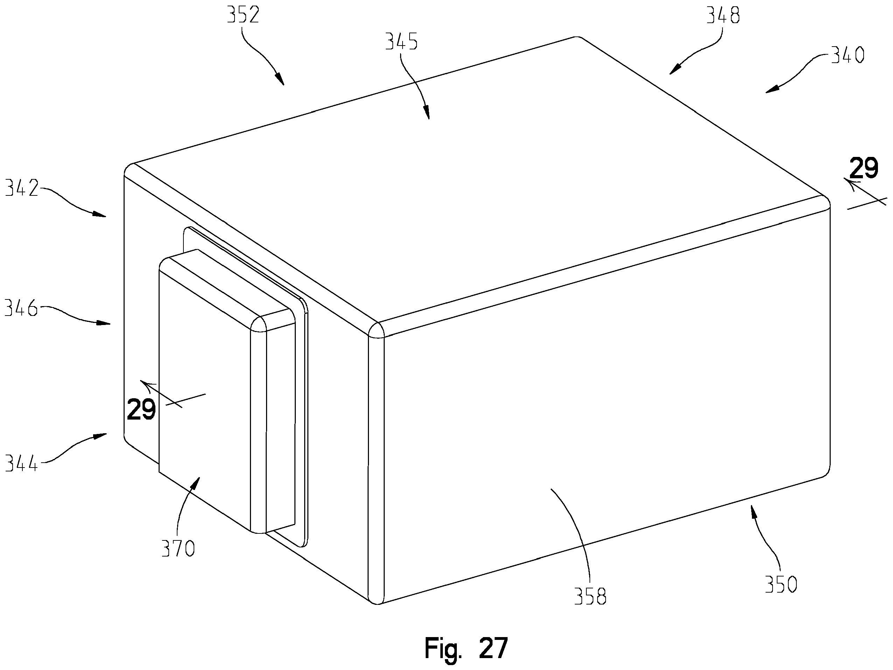

In a further embodiment, as shown in FIG. 27, a battery 336 may be enclosed within a submergible battery enclosure 340. The submergible battery enclosure 340 may be compatible with either vehicle 10 or vehicle 210 as shown and described with respect to FIGS. 1 and 11. The submergible battery enclosure 340 may be at least partially submergible or fully submergible in fluid, such as water or mud. The submergible battery enclosure 340 may include an upper half 342, a lower half 344, a top portion 345, a front portion 346, a back portion 348, a first side portion 350, and a second side portion 352. The battery enclosure 340 may be configured for managing a debris 354 and a gas 356 from the at least one battery 336 during a thermal runaway event. The thermal runaway event may occur when the battery 336 overheats, when the battery 336 is overcharged, and/or when the battery 336 is punctured or otherwise damaged. During the thermal runaway event, gases 356 such as hydrogen, carbon monoxide, and carbon dioxide may be released. The battery 336 may also decompose into the debris 354 and the debris 354 may be hot and flammable when released into an oxygen-rich environment.

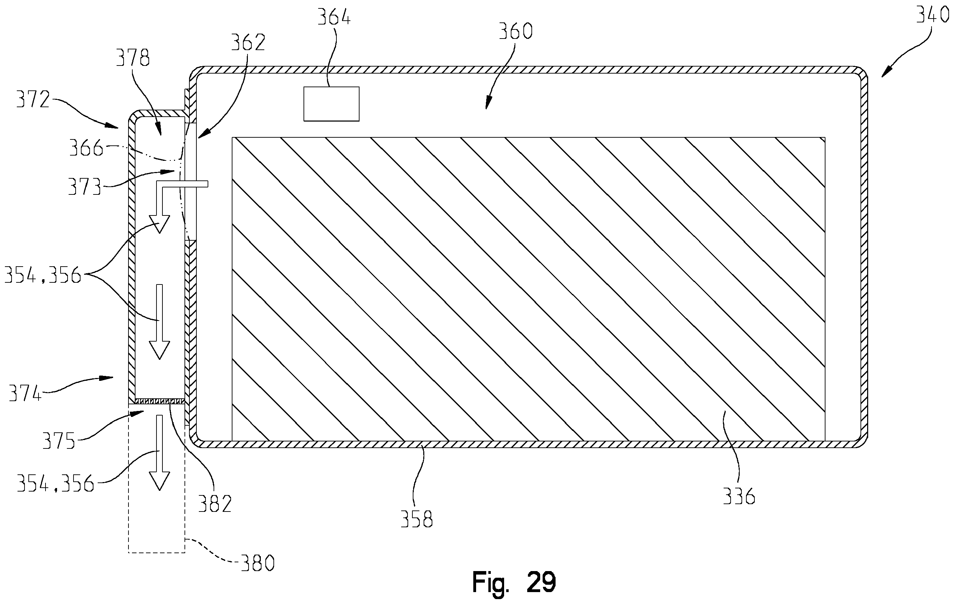

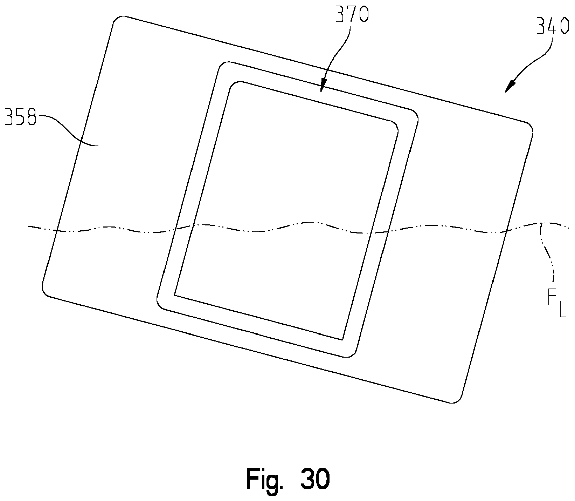

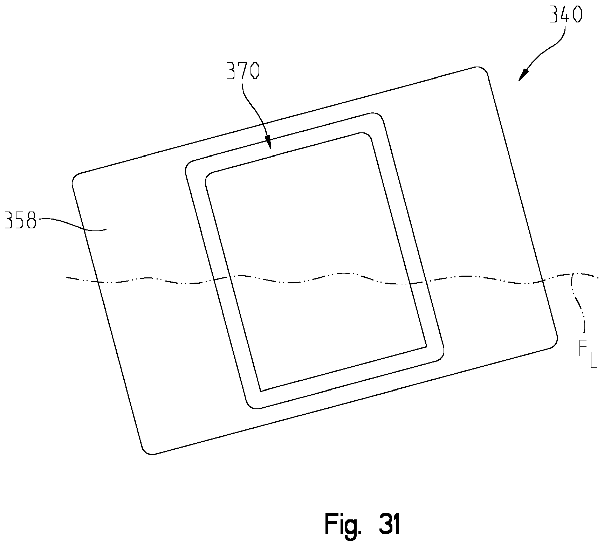

The submergible battery enclosure 340 may include a housing 358 adapted to receive the at least one battery 336 in an interior 360 of the housing 358. The housing 358 may include at least one opening 362. The at least one opening 362 may be positioned in the upper half 342 of the housing 358. The housing 358 may be sealed other than the at least one opening 362. The housing 358 may further include a vent 370 extending from the housing 358. The vent 370 may be integral, or one body of material, with the housing 358 or may be coupled to the housing 358. The vent 370 may include a first end 372 defining a first opening 373 that is in fluid communication with the interior 360 of the housing 358. The vent 370 may also include a second end 374, opposite from the first end 372, that defines a second opening 375. The second opening 375 may be in fluid communication with an outside environment. The vent 370 may also define a channel 378 between the first end 372 and the second end 374. As shown in FIG. 29, the channel 378 is rectangular, but other shapes and geometries are contemplated. In other embodiments, the channel 378 may include a torturous geometry. The channel 378 is adapted to prevent fluid from entering the housing 358. The channel 378 may be adapted to hold air such that the air pressure in the channel 378 prevents fluid from entering the housing 358. The channel 378 prevents fluid from entering the housing 358 using principles of density. Air is less dense than water when air is trapped inside the channel 378, and water forces are pushing on the air in the channel 378, and the air is pushing on the water, the water is not able to displace the air. Therefore, the housing 358 is adapted to stay dry even when fully submerged. The air pressure may prevent fluid from entering the housing 358 at varying heights of a fluid line F_{L} relative to the housing 378, including an angled fluid line F_{L}, as shown in FIGS. 30-31. This allows a vehicle to travel through the water without allowing water into the housing 358.

The submergible battery enclosure 340 may also be adapted to manage debris and gas from at the least one battery 336 during a thermal runaway event. The debris 354 and gas 356 formed by the battery 336 in the thermal runaway event may be substantially similar to that as described above with respect to battery 36 and/or battery 238. The battery enclosure 340 may include a sensor 364 to monitor the interior 360 of the housing 358 and the sensor may be similar to the sensor 64 and sensor 264 shown and described above. The battery enclosure 340 may also include monitoring system 400 as shown and described above.

In the thermal runaway event, the vent 370 is adapted to release the debris 354 and/or the gas 356 through the second opening 375 and out toward the exterior environment. The flow path of the debris 354 and the gas 356 is illustrated in FIG. 29. In FIG. 29, the debris 354 and the gas 356 may travel from the interior 360 of the housing 358 to the exterior of the housing 358. The exterior of the housing 358 may be at the first end 372 or the first opening 373 of the vent 370. In some embodiments, the housing 358 may include a sacrificial diaphragm 366 positioned to block the gas and/or the debris from flowing from the interior 360 of the housing 358 to the second end 374 of the vent 370. In the thermal runaway event, the sacrificial diaphragm 366 may be adapted to rupture to allow the debris 354 and the gas 356 to flow out from the interior 360 of the housing 358 to the first opening 373 of the vent 370. The debris 354 and the gas 356 may then flow from the first end 372 of the vent 370 to the second end 374 of the vent 370 along the channel 378. The debris 354 and the gas 356 may exit the vent 370 at the second opening 375. The debris 354 and gas 356 may travel through the channel 378 with high enough velocity and pressure to push the air out of the channel 378 and exit the vent 370 into the surrounding fluid.

In some embodiments, the vent 370 may include a mesh screen 382 coupled at or proximate to the second end 374 of the vent 370. The mesh screen 382 may cover the second opening 375. The mesh screen 382 may be adapted to prevent material, such as mud, from entering the channel 378 and prevents mud from blocking the channel 378. In the thermal runaway event, the mesh screen 382 may be operable to decouple from the vent 370 to allow debris 354 to exit through the second opening 375. In other embodiments, the mesh screen 382 may be coupled to the vent 370 via a hinge such that the mesh screen 380 is adapted to open during a thermal runaway event to allow debris 354 to exit through the second opening 375.

In some embodiments, the second opening 375 of the vent 370 is in fluid communication with a spark arrestor 380. The spark arrestor 380 may be similar to the spark arrestor 80 as described with respect to FIGS. 6-10. The spark arrestor 380 may be adapted to slow velocity of debris 354 exiting the channel 378 and/or may be adapted to collect debris 354 within an interior of the spark arrestor 380. The spark arrestor 380 may also be adapted to vent gas to the outside environment.

The following Examples are provided as example aspects of the disclosed subject matter:
Example 1. A battery enclosure for managing debris and gas from at least one battery during a thermal runaway event is provided. The battery enclosure comprising: a housing adapted to receive the at least one battery in an interior of the housing; a vent extending from the housing and including a first end and a second end, the first end in fluid communication with the interior of the housing; and a spark arrestor in fluid communication with the second end of the vent, the spark arrestor having a first region to vent the gas and a second region positioned to capture the debris.
Example 2. The battery enclosure of Example 1, further comprising a sensor positioned within the interior of the housing.
Example 3. The battery enclosure of Example 2, wherein the sensor is operable to activate an alarm based on a threshold volume of the gas.
Example 4. The battery enclosure of Example 1, wherein the vent is in fluid communication with the interior of the housing through at least one opening in an upper half of the housing.
Example 5. The battery enclosure of Example 4, wherein the at least one opening is on a side portion of the upper half of the housing.
Example 6. The battery enclosure of Example 1, wherein the spark arrestor further includes a cushion positioned in the second region.
Example 7. The battery enclosure of Example 6, wherein the cushion includes steel wool.
Example 8. The battery enclosure of Example 6, wherein the cushion has a non-linear profile.
Example 9. The battery enclosure of Example 6, wherein the cushion is welded to the spark arrestor.
Example 10. The battery enclosure of Example 1, wherein the spark arrestor includes at least one window located along a perimeter of the first region of the spark arrestor.
Example 11. The battery enclosure of Example 10, wherein the at least one window is covered by a mesh covering.
Example 12. The battery enclosure of Example 11, wherein the mesh covering includes a plurality of openings having a size of up to about 550 micron.
Example 13. The battery enclosure of Example 12, wherein the plurality of openings have a size of at least about 500 microns.
Example 14. The battery enclosure of Example 1, further comprising a sacrificial diaphragm positioned to block the gas from flowing from the interior of the housing to the second end of the vent.
Example 15. A recreational vehicle is provided. The recreational vehicle comprising: a plurality of ground engaging members; a frame assembly supported by the plurality of ground engaging members; and a battery enclosure for managing debris and gas from at least one battery during a thermal runaway event. The frame assembly including a front frame assembly, a middle frame assembly, and a rear frame assembly. The battery enclosure including: a housing adapted to receive the at least one battery in an interior of the housing, a vent extending from the housing and including a first end and a second end, the first end in fluid communication with the interior of the housing, and a spark arrestor in fluid communication with the second end of the vent. The spark arrestor having a first region to vent the gas and a second region positioned to capture the debris.
Example 16. The recreational vehicle of Example 15, further comprising a seating area supported by the middle frame assembly wherein the at least one battery is positioned under the seating area.
Example 17. The recreational vehicle of Example 16, wherein the spark arrestor is positioned under the seating area.
Example 18. The recreational vehicle of Example 16, further comprising an operator panel positioned opposite from the seating area. The battery enclosure further comprises a sensor positioned to monitor the interior of the housing. The operator panel is in communication with the sensor and configured to display a warning message based on a reading of the hydrogen sensor.
Example 19. The recreational vehicle of Example 15, further comprising a monitoring system coupled to the housing, the monitoring system including at least one of an electrical system including at least one temperature sensor and a mechanical system including at least one of a cover and a pressure valve.
Example 20. A method of managing debris and gas from at least one battery during a thermal runaway event using a battery enclosure including an interior and an exterior is provided. The method comprising: detecting a threshold concentration of the gas; venting the gas to the exterior of the battery enclosure; releasing the debris to the exterior of the battery enclosure; slowing a velocity of the debris; capturing at least a portion of the debris; and releasing the gas to an outside environment.
   Optionally, the method of Example 20 further comprising wherein detecting a threshold concentration of the gas further includes the step of issuing a warning when the threshold concentration of the gas is detected.
Example 21. A battery enclosure for managing debris and gas from at least one battery during a thermal runaway event is provided. The battery enclosure comprising: a housing adapted to receive the at least one battery in an interior of the housing; and a vent extending from the housing. The vent including a first portion defining a first opening in fluid communication with the interior of the housing, a second portion defining a second opening, and a central portion between the first portion and the second portion. The central portion defining a bend such that a first direction normal to the first opening and a second direction normal to the second opening are angled relative to each other and the central portion including an enlarged area at the bend.
Example 22. The battery enclosure of Example 21, wherein the housing further includes a sensor positioned within the interior of the housing.
Example 23. The battery enclosure of Example 22, wherein the sensor is operable to activate an alarm based on a threshold volume of the gas.
Example 24. The battery enclosure of Example 21, wherein the vent is in fluid communication with the interior of the housing through at least one opening in the housing.
Example 25. The battery enclosure of Example 24, wherein the at least one opening is positioned on an upper half of the housing.
Example 26. The battery enclosure of Example 24, wherein the at least one opening is positioned on a side portion of the housing.
Example 27. The battery enclosure of Example 21, wherein the enlarged area of the central portion tapers downwardly toward the second portion.
Example 28. The battery enclosure of Example 21, wherein the first direction forms an acute angle with the second direction in a projection of the first direction and the second direction on a horizontal plane.
Example 29. The battery enclosure of Example 21, wherein, the first direction forms one of a right angle and an obtuse angle with the second direction in a projection of the first direction and the second direction on a horizontal plane.
Example 30. The battery enclosure of Example 21, wherein the first opening is larger than the second opening.
Example 31. The battery enclosure of Example 21, wherein the central portion further includes a cushion layer at the bend.
Example 32. The battery enclosure of Example 21, further comprising a sacrificial diaphragm positioned to block the gas from flowing from the interior of the housing to the second portion of the vent.
Example 33. A recreational vehicle is provided. The recreational vehicle comprising: a plurality of ground engaging members; a frame assembly supported by the plurality of ground engaging members; and a battery enclosure for managing debris and gas from at least one battery during a thermal runaway event. The battery enclosure including a housing adapted to receive the at least one battery in an interior of the housing, and a vent extending from the housing. The vent including a first portion defining a first opening in fluid communication with the interior of the housing, a second portion defining a second opening, and a central portion between the first portion and the second portion. The central portion defining a bend such that the first opening and the second opening are angularly offset from each other and the central portion including an enlarged area at the bend.
Example 34. The recreational vehicle of Example 33, further comprising an operator seat supported by the frame assembly.
Example 35. The recreational vehicle of Example 34, wherein the at least one battery is positioned underneath the operator seat and the vent extends outwardly from underneath the operator seat such that the second end of the vent is one of adj acent to or rearward of the operator seat.
Example 36. The recreational vehicle of Example 34, further comprising an operator panel positioned opposite from the seating area. The battery enclosure further comprises a sensor positioned to monitor the interior of the housing. The operator panel is in communication with the sensor and adapted to display a warning message based on a reading of the hydrogen sensor.
Example 37. The recreational vehicle of Example 33, wherein the second opening is in fluid communication with an outside environment.
Example 38. The recreational vehicle of Example 37, wherein the second opening vents the gas and the debris outward such that the gas and the debris are directed downwardly toward the ground.
Example 39. The recreational vehicle of Example 37, wherein the second opening vents the gas and the debris outward such that the gas and the debris are directed substantially horizontally toward a rear of the recreational vehicle.
Example 40. A method of managing debris and gas from at least one battery during a thermal runaway event using a battery enclosure including an interior and an exterior is provided. The method comprising: venting the gas to the exterior of the battery enclosure; releasing the debris to the exterior of the battery enclosure; slowing a velocity of a first portion of the debris; and directing a velocity of a second portion of the debris toward an outside environment.
Example 41. A submergible battery enclosure is provided. The submergible battery enclosure comprising: a housing adapted to receive at least one battery in an interior of the housing; and a vent extending from the housing. The vent including a first end defining a first opening in fluid communication with the interior of the housing, a second end defining a second opening, and a channel defined between the first end and the second end, the channel adapted to prevent fluid from entering the housing.
Example 42. The submergible battery enclosure of Example 41, wherein the submergible battery enclosure is adapted for managing debris and gas from the at least one battery during a thermal runaway event.
Example 43. The submergible battery enclosure of Example 42, wherein the vent is adapted to release the gas through the second opening.
Example 44. The submergible battery enclosure of Example 42, wherein the vent is adapted to release the debris through the second opening.
Example 45. The submergible battery enclosure of Example 41, wherein the channel is rectangular.
Example 46. The submergible battery enclosure of Example 41, wherein the channel includes a tortuous geometry.
Example 47. The submergible battery enclosure of Example 41, wherein the second opening of the vent is in fluid communication with an outside environment.
Example 48. The submergible battery enclosure of Example 41, further comprising a spark arrestor in fluid communication with the second opening of the vent.
Example 49. The submergible battery enclosure of Example 41, wherein the vent further includes a mesh screen at the second end of the vent.
Example 50. The submergible battery enclosure of Example 41, wherein the vent is in fluid communication with the interior of the housing through at least one opening in an upper half of the housing.
Example 51. The submergible battery enclosure of Example 41, further comprising a sacrificial diaphragm positioned to block the gas from flowing from the interior of the housing to the second end of the vent.

Various aspects and advantageous embodiments of the invention are summarized in the clauses numbered 1 to 51 hereafter:
1. A battery enclosure for managing debris and gas from at least one battery during a thermal runaway event, the battery enclosure comprising:
   a housing adapted to receive the at least one battery in an interior of the housing;
   a vent extending from the housing and including a first end and a second end, the first end in fluid communication with the interior of the housing; and
   a spark arrestor in fluid communication with the second end of the vent, the spark arrestor having a first region to vent the gas and a second region positioned to capture the debris.
2. The battery enclosure of clause 1, further comprising a sensor positioned within the interior of the housing.
3. The battery enclosure of clause 2, wherein the sensor is operable to activate an alarm based on a threshold volume of the gas.
4. The battery enclosure of clause 1, wherein the vent is in fluid communication with the interior of the housing through at least one opening in an upper half of the housing.
5. The battery enclosure of clause 4, wherein the at least one opening is on a side portion of the upper half of the housing.
6. The battery enclosure of clause 1, wherein the spark arrestor further includes a cushion positioned in the second region.
7. The battery enclosure of clause 6, wherein the cushion includes steel wool.
8. The battery enclosure of clause 6, wherein the cushion has a non-linear profile.
9. The battery enclosure of clause 6, wherein the cushion is welded to the spark arrestor.
10. The battery enclosure of clause 1, wherein the spark arrestor includes at least one window located along a perimeter of the first region of the spark arrestor.
11. The battery enclosure of clause 10, wherein the at least one window is covered by a mesh covering.
12. The battery enclosure of clause 11, wherein the mesh covering includes a plurality of openings having a size of up to about 550 micron.
13. The battery enclosure of clause 12, wherein the plurality of openings have a size of at least about 500 microns.
14. The battery enclosure of clause 1, further comprising a sacrificial diaphragm positioned to block the gas from flowing from the interior of the housing to the second end of the vent.
15. A recreational vehicle comprising:
   a plurality of ground engaging members;
   a frame assembly supported by the plurality of ground engaging members, the frame assembly including a front frame assembly, a middle frame assembly, and a rear frame assembly; and
   a battery enclosure for managing debris and gas from at least one battery during a thermal runaway event, the battery enclosure including:
      a housing adapted to receive the at least one battery in an interior of the housing,
      a vent extending from the housing and including a first end and a second end, the first end in fluid communication with the interior of the housing, and
      a spark arrestor in fluid communication with the second end of the vent, the spark arrestor having a first region to vent the gas and a second region positioned to capture the debris.
16. The recreational vehicle of clause 15, further comprising a seating area supported by the middle frame assembly wherein the at least one battery is positioned under the seating area.
17. The recreational vehicle of clause 16, wherein the spark arrestor is positioned under the seating area.
18. The recreational vehicle of clause 16, further comprising an operator panel positioned opposite from the seating area, wherein the battery enclosure further comprises a sensor positioned to monitor the interior of the housing, the operator panel in communication with the sensor and configured to display a warning message based on a reading of the hydrogen sensor.
19. The recreational vehicle of clause 15, further comprising a monitoring system coupled to the housing, the monitoring system including at least one of an electrical system including at least one temperature sensor and a mechanical system including at least one of a cover and a pressure valve.
20. A method of managing debris and gas from at least one battery during a thermal runaway event using a battery enclosure including an interior and an exterior, the method comprising:
   detecting a threshold concentration of the gas;
   venting the gas to the exterior of the battery enclosure;
   releasing the debris to the exterior of the battery enclosure;
   slowing a velocity of the debris;
   capturing at least a portion of the debris; and
   releasing the gas to an outside environment.
21. A battery enclosure for managing debris and gas from at least one battery during a thermal runaway event, the battery enclosure comprising:
   a housing adapted to receive the at least one battery in an interior of the housing; and
   a vent extending from the housing including,
   a first portion defining a first opening in fluid communication with the interior of the housing,
   a second portion defining a second opening, and
   a central portion between the first portion and the second portion, the central portion defining a bend such that a first direction normal to the first opening and a second direction normal to the second opening are angled relative to each other and the central portion including an enlarged area at the bend.
22. The battery enclosure of clause 21, wherein the housing further includes a sensor positioned within the interior of the housing.
23. The battery enclosure of clause 22, wherein the sensor is operable to activate an alarm based on a threshold volume of the gas.
24. The battery enclosure of clause 21, wherein the vent is in fluid communication with the interior of the housing through at least one opening in the housing.
25. The battery enclosure of clause 24, wherein the at least one opening is positioned on an upper half of the housing.
26. The battery enclosure of clause 24, wherein the at least one opening is positioned on a side portion of the housing.
27. The battery enclosure of clause 21, wherein the enlarged area of the central portion tapers downwardly toward the second portion.
28. The battery enclosure of clause 21, wherein the first direction forms an acute angle with the second direction in a projection of the first direction and the second direction on a horizontal plane.
29. The battery enclosure of clause 21, wherein, the first direction forms one of a right angle and an obtuse angle with the second direction in a projection of the first direction and the second direction on a horizontal plane.
30. The battery enclosure of clause 21, wherein the first opening is larger than the second opening.
31. The battery enclosure of clause 21, wherein the central portion further includes a cushion layer at the bend.
32. The battery enclosure of clause 21, further comprising a sacrificial diaphragm positioned to block the gas from flowing from the interior of the housing to the second portion of the vent.
33. A recreational vehicle comprising:
   a plurality of ground engaging members;
   a frame assembly supported by the plurality of ground engaging members; and
   a battery enclosure for managing debris and gas from at least one battery during a thermal runaway event, the battery enclosure including,
   a housing adapted to receive the at least one battery in an interior of the housing, and
   a vent extending from the housing including,
   a first portion defining a first opening in fluid communication with the interior of the housing,
   a second portion defining a second opening, and
   a central portion between the first portion and the second portion, the central portion defining a bend such that the first opening and the second opening are angularly offset from each other and the central portion including an enlarged area at the bend.
34. The recreational vehicle of clause 33, further comprising an operator seat supported by the frame assembly.
35. The recreational vehicle of clause 34, wherein the at least one battery is positioned underneath the operator seat and the vent extends outwardly from underneath the operator seat such that the second end of the vent is one of adjacent to or rearward of the operator seat.
36. The recreational vehicle of clause 34, further comprising an operator panel positioned opposite from the seating area, wherein the battery enclosure further comprises a sensor positioned to monitor the interior of the housing, the operator panel in communication with the sensor and adapted to display a warning message based on a reading of the hydrogen sensor.
37. The recreational vehicle of clause 33, wherein the second opening is in fluid communication with an outside environment.
38. The recreational vehicle of clause 37, wherein the second opening vents the gas and the debris outward such that the gas and the debris are directed downwardly toward the ground.
39. The recreational vehicle of clause 37, wherein the second opening vents the gas and the debris outward such that the gas and the debris are directed substantially horizontally toward a rear of the recreational vehicle.
40. A method of managing debris and gas from at least one battery during a thermal runaway event using a battery enclosure including an interior and an exterior, the method comprising:
   venting the gas to the exterior of the battery enclosure;
   releasing the debris to the exterior of the battery enclosure;
   slowing a velocity of a first portion of the debris; and
   directing a velocity of a second portion of the debris toward an outside environment.
41. A submergible battery enclosure comprising:
   a housing adapted to receive at least one battery in an interior of the housing; and
   a vent extending from the housing, the vent including a first end defining a first opening in fluid communication with the interior of the housing, a second end defining a second opening, and a channel defined between the first end and the second end, the channel adapted to prevent fluid from entering the housing.
42. The submergible battery enclosure of clause 41, wherein the submergible battery enclosure is adapted for managing debris and gas from the at least one battery during a thermal runaway event.
43. The submergible battery enclosure of clause 42, wherein the vent is adapted to release the gas through the second opening.
44. The submergible battery enclosure of clause 42, wherein the vent is adapted to release the debris through the second opening.
45. The submergible battery enclosure of clause 41, wherein the channel is rectangular.
46. The submergible battery enclosure of clause 41, wherein the channel includes a tortuous geometry.
47. The submergible battery enclosure of clause 41, wherein the second opening of the vent is in fluid communication with an outside environment.
48. The submergible battery enclosure of clause 41, further comprising a spark arrestor in fluid communication with the second opening of the vent.
49. The submergible battery enclosure of clause 41, wherein the vent further includes a mesh screen at the second end of the vent.
50. The submergible battery enclosure of clause 41, wherein the vent is in fluid communication with the interior of the housing through at least one opening in an upper half of the housing.
51. The submergible battery enclosure of clause 41, further comprising a sacrificial diaphragm positioned to block the gas from flowing from the interior of the housing to the second end of the vent.

## Claims

1. A battery enclosure for managing debris and gas from at least one battery during a thermal runaway event, the battery enclosure comprising:
a housing adapted to receive the at least one battery in an interior of the housing;
a vent extending from the housing and including a first end and a second end, the first end in fluid communication with the interior of the housing; and
a spark arrestor in fluid communication with the second end of the vent, the spark arrestor having a first region to vent the gas and a second region positioned to capture the debris.

2. The battery enclosure of claim 1, further comprising a sensor positioned within the interior of the housing.

3. The battery enclosure of claim 2, wherein the sensor is operable to activate an alarm based on a threshold volume of the gas.

4. The battery enclosure of claim 1, wherein the vent is in fluid communication with the interior of the housing through at least one opening in an upper half of the housing.

5. The battery enclosure of claim 4, wherein the at least one opening is on a side portion of the upper half of the housing.

6. The battery enclosure of claim 1, wherein the spark arrestor further includes a cushion positioned in the second region.

7. The battery enclosure of claim 6, wherein the cushion includes steel wool.

8. The battery enclosure of claim 6, wherein the cushion has a non-linear profile.

9. The battery enclosure of claim 6, wherein the cushion is welded to the spark arrestor.

10. The battery enclosure of claim 1, wherein the spark arrestor includes at least one window located along a perimeter of the first region of the spark arrestor.

11. The battery enclosure of claim 10, wherein the at least one window is covered by a mesh covering.

12. The battery enclosure of claim 11, wherein the mesh covering includes a plurality of openings having a size of up to about 550 micron.

13. The battery enclosure of claim 12, wherein the plurality of openings have a size of at least about 500 microns.

14. The battery enclosure of claim 1, further comprising a sacrificial diaphragm positioned to block the gas from flowing from the interior of the housing to the second end of the vent.
